# EUROPEAN PATENT APPLICATION

(11) **EP 1 912 465 A2**
(43) Date of publication of application: **16.04.2008**
(21) Application number: 07007869.6
(22) Date of filing: 18.04.2007
(51) Int. Cl.: H04Q 11/00

(54) **Control system of a multichannel optical switch**

(30) Priority: 14.08.2006 JP 2006221252
(71) Applicant: FUJITSU LIMITED, Kawasaki-shi, Kanagawa 211-8588 (JP)
(72) Inventor: Nakano, Takashi, Kawasaki-shi Kanagawa 211-8588 (JP); Ueno, Tomohiro, Kawasaki-shi Kanagawa 211-8588 (JP); Kai, Yutaka, Kawasaki-shi Kanagawa 211-8588 (JP); Takita, Yutaka, Kawasaki-shi Kanagawa 211-8588 (JP)
(74) Representative: HOFFMANN EITLE

(57) **Abstract**

A contr.ol system of a multichannel optical switch suppressing the generation of a leakage current in a multichannel, highly integrated EO-SW to enable stable operation, that is, a control system of a multichannel optical switch using devices having an EO effect wherein an electrode voltage application device applies voltage for switching optical switch devices based on switching data when judging that an elapsed time from when the switching data has started to be output from a path switching instruction device is shorter than a predetermined counted time threshold and the electrode voltage application device applies voltage for switching based on the switching data only when a switching judgment processing device judges that predetermined switching conditions have been met when judging that the elapsed time has been exceeded and does not apply voltage for switching to the switch devices and sends a switching failure notice to a path switching instruction device from the switching judgment processing device when judging that predetermined switching conditions have not been met.

## Description

### CROSS REFERENCE TO RELATED APPLICATION

The present invention contains subject matter related to Japanese Patent Application No. 2006-221252 filed in the Japan Patent Office on August 14, 2006, the entire contents of which being incorporated herein by reference.

### BACKGROUND OF THE INVENTION

### 1. Field of the Invention

The present invention relates to a control system of a multichannel optical switch utilizing an electro-optical effect (EO effect), more particularly relates to a control system of a multichannel optical switch preventing heat generation of the optical switch devices due to a leakage current between electrodes of the optical switch devices and the ground or between wires.

### 2. Description of the Related Art

Optical switches using devices (PLZT etc.) having the Pockels effect, Kerr effect, or another EO effect have various merits compared with mechanical optical switches (MEMS) such as a faster operating speed and a longer life than mechanical switches and are promising for application to systems for switching large capacity optical circuits at a high speed (for example, optical routers etc.) (below, such optical switches having such an EO effect being referred to as "EO-SWs" or simply "optical switches").

An EO-SW is characterized by changing the deflection angle in accordance with the magnitude of the electric field given or its change (relating to electrode area or applied voltage).

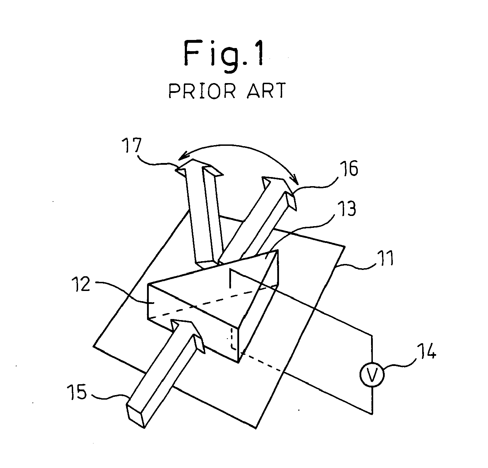

FIG. 1 is a perspective view of one known optical switch. In the figure, 11 is a ground plate, 12 is a prism-shaped optical switch device formed by PLZT (lanthanum-doped lead zirconium titanate), 13 is an electrode plate formed on the top surface of the optical switch device 12, and 14 is a power source applying a voltage V between the ground plate 11 and electrode plate 13. Before applying the voltage V, the input light 15 passes through the optical switch 12 as output light 16 without being refracted. After applying the voltage V, the input light 15 is refracted and becomes the output light 17.

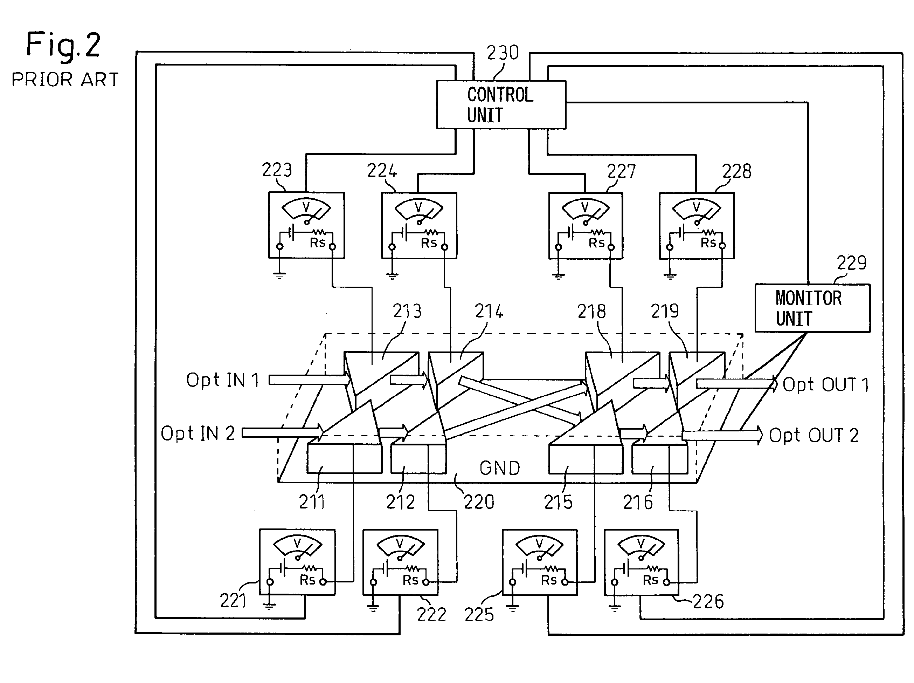

FIG. 2 is a block diagram of the configuration of a conventional control system of a two-channel optical switch. In the figure, 211 to 214 are input side optical switch devices, 215 to 219 are output side optical switch devices, 220 is a ground plate, 221 to 224 are power sources applying voltage to the respective input side optical switch devices 211 to 214, 225 to 228 are power sources applying voltage to the respective output side optical switch devices 215 to 219, and 230 is a control unit controlling the output voltages of the power sources 221 to 228. The control signals are manually input to the control unit.

In this way, due in part to its being in the initial stage of R&D, the conventional EO-SW had few carried channels (in the illustration, two channels). It still did not target being built in larger systems. The drive unit was comprised of a plurality of power sources controlled individually for each electrode of the optical switch devices.

For example, if the optical switch devices 213, 214, 218, and 219 are supplied with the voltage V1-1, the optical signal input from the OptIN1 of the first channel is output to OptOUT1 whereby the path 1-1 is established, while if the optical switch devices 213, 214, 215, and 216 are supplied with the voltage V1-2, it is output to OptOUT2 whereby the path 1-2 is established.

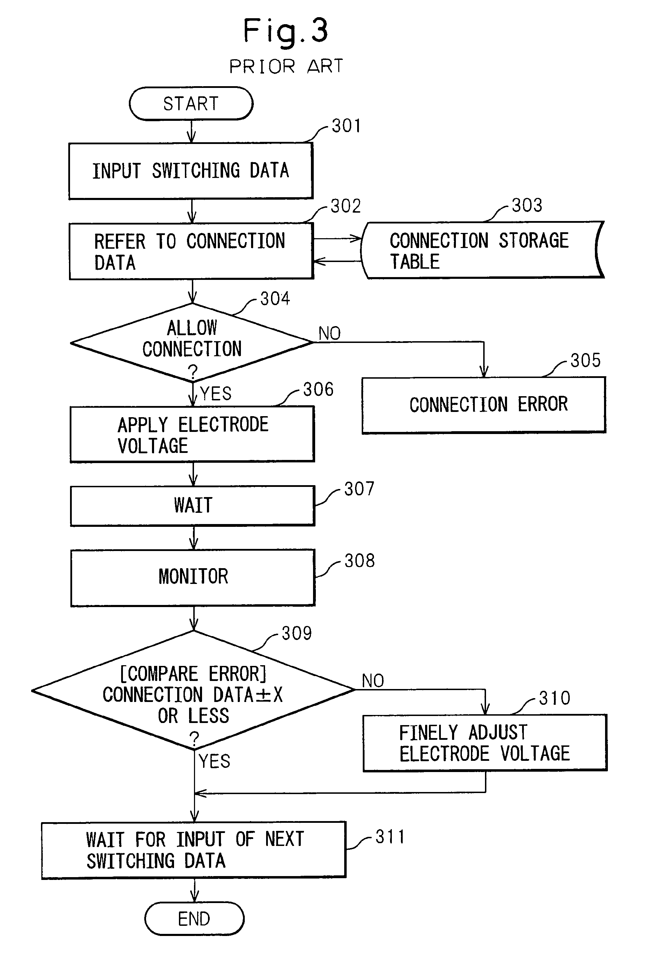

FIG. 3 is a flowchart for explaining the operation of the conventional control system of the two-channel optical switch shown in FIG. 2. In the figure, when switching data is manually input from the outside to the control unit 230 at step 301, the control unit 230 refers to a connection memory table 303 to refer to the current state of path connection at step 302 and judges whether to allow connection at step 304. If the channel to be used for the input switching data is not yet in use, it allows connection, while if it is being used, it judges there is a connection error at step 305 and does not allow the connection.

If connection is allowed, the system applies a desired voltage to predetermined electrodes at step 306, then waits for a certain time at step 307 and monitors the status at step 308. In the monitoring, at step 309, it compares the error and judges whether the error between the input data and connection data is within a certain range. If within a certain range, at step 310, it finely adjusts the electrode voltage, then, at step 311, waits for the next input of switching data. The judgment in the comparison of error at step 309 corrects for aging of the EO-SW, fluctuations in temperature, and other factors behind fluctuation so that the applied voltage becomes always optimal.

Related art include Japanese Patent Publication (A) No. 5-292030, International Publication WO94/09575 Pamphlet, and Japanese Patent Publication (A) No. 4-194824.

Summarizing the problems to be solved by the invention, to build the switch into larger systems, a multichannel, highly integrated EO-SW has been developed. Making this operate to switch paths continuously at a high speed is now being targeted. In the related art, there was no problem since there were few channels and the switching was performed intermittently at a slow speed, but the following problems arose when making a newly developed multichannel, highly integrated EO-SW operate to switch paths continuously at a high speed.

Problem 1. Due to the capacity components present between the electrodes of the optical switch devices and the ground, if switching paths continuously at a high speed, a continuous leakage current is generated between the electrodes and ground (leakage current in working channel circuit).

Problem 2. In the multichannel, highly integrated EO-SW, since there are capacity components present between the adjoining channels (electrodes and pattern parts), if switching paths continuously at a high speed, a continuous leakage current is generated between adjoining channels (leakage current between adjoining channels).

Due to the generation of the leakage current, not only does noise occur at the electrodes, but also the phenomenon of a rise in temperature around the leakage part occurs and in the worst case causes the optical switch devices to break.

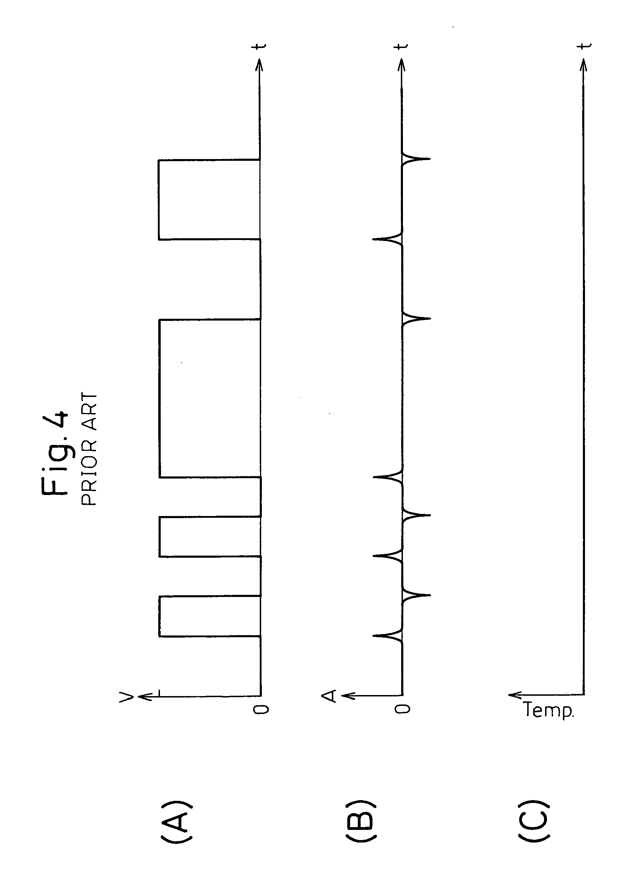

FIG. 4 is a graph for explaining the operation of the conventional control system of the two-channel optical switch shown in FIG. 2. In the figure, (A) is a graph showing the changes along with time in the example of voltage applied to one optical switch device, (B) is a graph showing the leakage current generated by the applied voltage, and (C) is a graph showing the change in temperature produced by the applied voltage.

As shown in (A) of FIG. 4, if repeatedly applying and stopping the application of voltage to one optical switch device at a relatively low frequency, leakage current as shown in (B) is generated by the rise and fall of the applied voltage, but the interval between generation of the leakage current is long, so almost no heat is generated as shown in (C).

However, if the period being applying and stopping the voltage becomes short, the problem of heat generation due to the leakage current occurs.

FIG. 5 is a view showing the state of current leaking from the electrodes of optical switch devices 51 to 54 to a ground plate 55.

FIG. 6 is a view showing the leakage current generated between wires 605 to 608 connected to the electrodes of optical switch devices 601 to 604 and wires 613 to 616 connected to electrodes of optical switch devices 609 to 612.

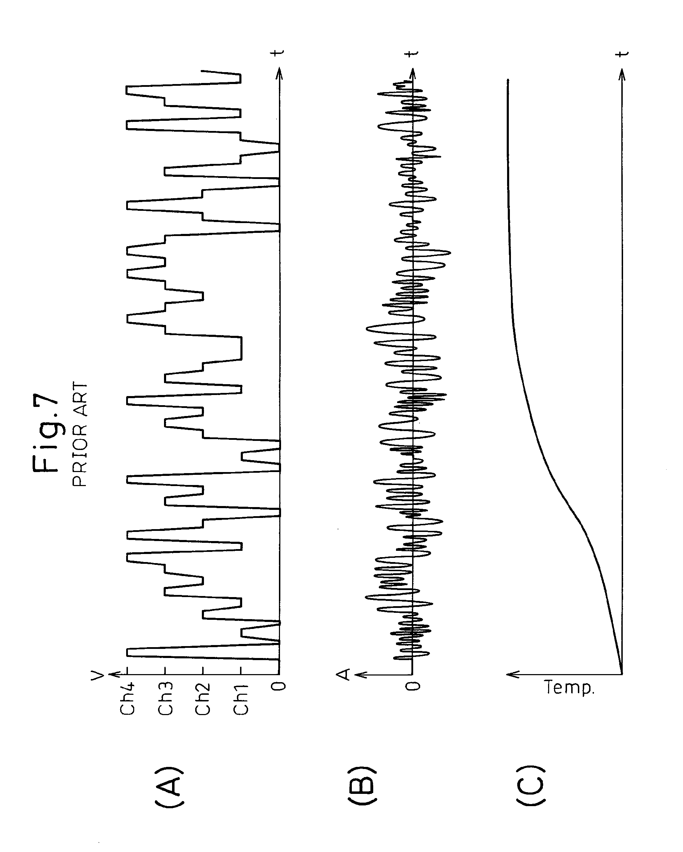

FIG. 7 is a graph showing the leakage current and the state of heat generation when a conventional control system of an optical switch continuously switches paths at a high speed. In the figure, as shown by (A), if changing the voltage applied to the electrodes of the optical switch devices continuously at a high speed, as shown by (B), leakage current is continuously generated and, as a result, as shown in (C), the temperature of the optical switch devices rises along with the elapse of time. As a result, as explained above, in the worst case, there was the problem of the optical switch devices breaking.

### SUMMARY OF THE INVENTION

An object of the present invention, in considering the problems of the above stated related art, is to provide a control system of an optical switch controlling the switching operation in a multichannel, highly integrated EO-SW so as to suppress the generation of leakage current and enable stable operation.

To achieve the above object, according to a first aspect of the invention, there is provided a control system of optical switch devices of a multichannel optical switch using devices having an electro-optical effect, the control system of a multichannel optical switch provided with a switching data input device for inputting switching data of the optical switch devices from a path switching instruction device, an elapsed time recording device for recording an elapsed time EL_T from which the switching data starts to be output from the path switching instruction device, a judgment data recording device for recording judgment data for judging whether switching of the optical switch devices is possible based on the switching data, an elapsed time judgment device for determining whether the elapsed time EL_T has exceeded a predetermined counted time threshold Am_T, a switching judgment processing device for judging switching based on an output of the elapsed time judgment device and an output of the judgment data recording device, and an electrode voltage application device, the electrode voltage application device applying voltage for switching the optical switch devices based on the switching data when the elapsed time judgment device has judged that the elapsed time EL_T is shorter than the predetermined counted time threshold Am_T, the electrode voltage application device applying voltage for switching the optical switch devices based on the switching data to the optical switch devices when the elapsed time judgment device has judged that the elapsed time EL_T has exceeded the predetermined counted time threshold Am_T only when the switching judgment processing device judges that predetermined switching conditions have been met and the electrode voltage application device not applying voltage for switching the optical switch devices to the optical switch devices and sending a switching failure notice from the switching judgment processing device to the path switching instruction device when the switching judgment processing device judges that predetermined switching conditions have not been met.

According to a second aspect of the present invention, there is provided the first aspect of the invention wherein the switching data input device is provided with a Vt1 register for recording a voltage Vt1 applied by a path connection of before switching of the optical switch devices and a Vt2 register for recording a voltage Vt2 applied by a path connection of after switching of the optical switches, the judgment data recording device is provided with a Vts register for recording an absolute value Vts of a difference of the voltage Vt1 and voltage Vt2 and a Vtsm register for adding a value stored in the Vts register to a switching channel difference sum Vtsm to update the switching channel difference sum Vtsm, the elapsed time recording device is an EL_T register for recording the elapsed time EL_T, the switching judgment processing device is provided with a VtsmA register for storing a value VtsmA obtained by dividing the Vtsm value by the elapsed time EL_T when the elapsed time judgment device has judged that the predetermined counted time threshold Am_T has been exceeded and a comparison device for comparing the VtsmA value and a predetermined electrode voltage application judgment threshold VtsmA_TH, the values of the EL_T register and the Vtsm register are cleared to a predetermined initial value when the division ends, and the electrode voltage application device applies voltage for switching the optical switch devices based on the switching data to the optical switch devices when the VtsmA value is smaller than the predetermined electrode voltage application judgment threshold VtsmA_Th and sends a switching failure notice to the path data switching instruction device when the VtsmA value is the predetermined electrode voltage application judgment threshold VtsmA_TH or more.

According to a third aspect of the present invention, there is provided the first aspect of the invention wherein the switching data input device and judgment data recording device are provided with an Sw register for recording the switching count Sw of the optical switch devices, the elapsed time recording device is an EL_T register for recording the elapsed time EL_T, the switching judgment processing device is provided with an SwA register for storing an SwA value obtained by dividing the switching count Sw by the elapsed time EL_T when the elapsed time judgment device has judged that the predetermined counted time threshold Am_T has been exceeded and a comparison device for comparing the SwA value with a predetermined electrode voltage application judgment threshold SwA_TH, the value of the Sw register and the value of the EL_T register are cleared to a predetermined initial value when the division is ended, and the electrode voltage application device applies voltage for switching the optical switch devices based on the switching data to switch the optical switch devices when the SwA value is smaller than the predetermined electrode voltage application judgment threshold SwA_TH and sends a switching failure notice to the path data switching instruction device when the SwA value is the predetermined electrode voltage application judgment threshold SwA_TH or more.

According to a fourth aspect of the present invention, there is provided the first aspect of the invention wherein the switching data input device is provided with a Vt1 register for recording a voltage Vt1 applied by a path connection of before switching of the optical switch devices and a Vt2 register for recording a voltage Vt2 applied by a path connection of after switching of the optical switches, the judgment data recording device is provided with a Vts register for recording an absolute value Vts of a difference between the voltage Vt1 and the voltage Vt2 and a Vtsm register for adding a value stored in the Vts register to a switching channel difference sum Vtsm to update the switching channel difference sum Vtsm, the elapsed time recording device is an EL_T register for recording the elapsed time EL_T, the switching judgment processing device is provided with a.WvtsmA register for storing a channel switching heat generation calculated value (WvtsmA value) obtained by subtracting from a product of the switching channel difference sum Vtsm and a coefficient Wvt for deriving the natural heat discharge envisioned from the switching channel difference sum Vtsm the product of the elapsed time EL_T and a coefficient Wvt_loss for deriving the amount of natural heat discharge envisioned from the elapsed time EL_T when the elapsed time judgment device has judged that the predetermined counted time threshold Am_T has been exceeded and a comparison device for comparing the WvtsmA value with a predetermined WvtsmA threshold WvtsmA_TH, the value of the Vtsm register and the value of the EL_T register are cleared to a predetermined initial value when the subtraction ends, and the electrode voltage application device applies voltage for switching the optical switch devices based on the switching data to the optical switch devices when the WvtsmA value is smaller than the predetermined electrode voltage application judgment WvtsmA threshold WvtsmA_TH and sends a switching failure notice to the path data switching instruction device when the WvtsmA value is the WvtsmA threshold WvtsmA_TH or more.

According to a fifth aspect of the present invention, there is provided the first aspect of the invention wherein the switching data input device and judgment data recording device are provided with an Sw register for recording the switching count Sw of the optical switch devices, the elapsed time recording device is an EL_T register for recording the elapsed time EL_T, the switching judgment processing device is provided with a WswA register for storing a WswA value obtained by subtracting from a product of the switching count Sw and a coefficient Wsw for deriving the amount of heat generation envisioned from the switching count Sw the product of the elapsed time EL_T and a coefficient Wsw_loss for deriving the amount of natural heat generation envisioned from the elapsed time EL_T when the elapsed time judgment device has judged that the predetermined counted time threshold Am_T has been exceeded and a comparison device for comparing the WswA value with a predetermined WswA threshold WswA_TH, the value of the Sw register and the value of the EL_T register respectively are cleared to a predetermined initial value when the subtraction ends, and the electrode voltage application device applies voltage for switching the optical switch devices based on the switching data to the optical switch devices when the WswA value is smaller than the predetermined WswA threshold WswA_TH and sends a switching failure notice to the path data switching instruction device when the WswA value is the WswA threshold WswA_TH or more.

According to a sixth aspect of the present invention, there is provided the first aspect of the invention wherein the switching data input device is provided with an applied voltage register for recording a working channel applied voltage V₁ for the optical switch device of a working channel, a preceding channel applied voltage V₁- for the optical switch device of the preceding channel adjoining the working channel, and a succeeding channel applied voltage V₁₊ for the optical switch device of the succeeding channel adjoining the working channel, the judgment data recording device is provided with a register for storing a preceding adjoining channel voltage difference Vtc1 between the working channel applied voltage V₁ and the preceding channel applied voltage V₁₋ and a succeeding adjoining channel voltage difference Vtc2 between the applied voltage V₁ and the applied voltage V₁₊, a comparison device for comparing the absolute value of the preceding adjoining channel voltage difference Vtc1 and the absolute value of the succeeding adjoining channel voltage difference Vtc2, a conversion device for converting the greater adjoining channel voltage difference among the absolute value of the preceding adjoining channel voltage difference Vtc1 and the absolute value of the succeeding adjoining channel voltage difference Vtc2 into an adjoining channel voltage difference value Vtc, and a Vtcm register for adding the adjoining channel voltage difference value Vtc to the adjoining channel difference sum Vtcm to update the adjoining channel difference sum, the elapsed time recording device is an EL_T register for recording the elapsed time EL_T, and the electrode voltage application device applies voltage for switching the optical switch devices based on the switching data to the optical switch devices when the VtcmA value is smaller than the predetermined electrode voltage application judgment threshold VtcmA TH and sends a switching failure notice to the path data switching instruction device when the VtcmA value is the predetermined electrode voltage application judgment threshold VtcmA_TH or more.

According to a seventh aspect of the present invention, there is provided the first aspect of the invention wherein the switching data input device is provided with an applied voltage register for recording a working channel applied voltage V₁ for the optical switch device of a working channel, a preceding channel applied voltage V₁- for the optical switch device of the preceding channel adjoining the working channel, and a succeeding channel applied voltage V₁₊ for the optical switch device of the succeeding channel adjoining the working channel, the judgment data recording device is provided with a register for storing a preceding adjoining channel voltage difference Vtc1 between the working channel applied voltage V₁ and the preceding channel applied voltage V₁- and a succeeding adjoining channel voltage difference Vtc2 between the applied voltage V₁ and the applied voltage V₁₊, a first comparison device for comparing the absolute value of the preceding adjoining channel voltage difference Vtc1 and an adjoining channel difference judgment threshold Vtc_TH, a second comparison device for comparing the absolute value of the succeeding adjoining channel voltage difference Vtc2 and the adjoining channel difference judgment threshold Vtc_TH, and a switch count counter for incrementing a switch count Sw by "1" to update Sw when the absolute value of the preceding adjoining channel voltage difference Vtc1 is the adjoining channel difference threshold Vtc_TH or more and the absolute value of the succeeding adjoining channel voltage difference Vtc2 is the adjoining channel difference threshold Vtc_TH or more, the elapsed time recording device is an EL_T register for recording the elapsed time EL_T, the switching judgment processing device is provided with an SwcA register for storing a unit time inter-channel leak processing value SwcA obtained by dividing the value Sw of the switch count counter by the elapsed time EL_T when the elapsed time judgment device has judged that the predetermined counted time threshold Am T has been exceeded and a third comparison device for comparing the inter-channel leak processing value SwcA and a predetermined channel leak processing electrode voltage application judgment threshold SwcA_TH, the values of the EL_T register and the switch count counter are cleared to a predetermined initial value when the division ends, and the electrode voltage application device applies voltage for switching the optical switch devices based on the switching data to the optical switch devices when the inter-channel leak processing value SwcA is smaller than the predetermined channel leak processing electrode voltage application judgment threshold SwcA_TH and sends a switching failure notice to the path data switching instruction device when the inter-channel leak processing value SwcA is the predetermined channel leak processing electrode voltage application judgment threshold SwcA_TH or more.

According to an eighth aspect of the present invention, there is provided the first aspect of the invention wherein the switching data input device is provided with an applied voltage register for recording a working channel applied voltage V₁ for the optical switch device of a working channel, a preceding channel applied voltage V₁- for the optical switch device of the preceding channel adjoining the working channel, and a succeeding channel applied voltage V₁₊ for the optical switch device of the succeeding channel adjoining the working channel, the judgment data recording device is provided with a register for storing a preceding adjoining channel voltage difference Vtc1 between the working channel applied voltage V₁ and the preceding channel applied voltage V₁- and a succeeding adjoining channel voltage difference Vtc2 between the applied voltage V₁ and the applied voltage V₁₊, a comparison device for comparing the absolute value of the preceding adjoining channel voltage difference Vtc1 and the absolute value of the succeeding adjoining channel voltage difference Vtc2, a conversion device for converting the greater adjoining channel voltage difference among the absolute value of the preceding adjoining channel voltage difference Vtc1 and the absolute value of the succeeding adjoining channel voltage difference Vtc2 into an adjoining channel voltage difference value Vtc, and a Vtcm register for adding the adjoining channel voltage difference value Vtc to the adjoining channel difference sum Vtcm to update the adjoining channel difference sum, the elapsed time recording device is an EL_T register for recording the elapsed time EL_T, the switching judgment processing device is provided with a WvtcmA register for a channel leak channel switching heat generation calculated value (WvtcmA value) obtained by subtracting from a product of the adjoining channel voltage difference Vtc and a coefficient Wvtc for deriving the amount of heat generation envisioned from the adjoining channel difference voltage difference Vtc the product of the elapsed time EL_T and a coefficient Wswc_loss for deriving the amount of natural heat generation envisioned from the elapsed time EL_T when the elapsed time judgment device judges that the predetermined counted time threshold Am_T has been exceeded and a comparison device for comparing the WvtcmA value with a predetermined WvtcmA threshold WvtcmA_TH, the value of the Vtcm register and the value of the EL_T register are cleared to a predetermined initial value when the subtraction ends, and the electrode voltage application device applies voltage for switching the optical switch devices based on the switching data to the optical switch devices when the WvtcmA value is smaller than the predetermined WvtcmA threshold WvtcmA_TH and sends a switching failure notice to the path data switching instruction device when the WvtcmA value is the predetermined WvtcmA threshold WvtcmA_TH or more.

According to a ninth aspect of the present invention, there is provided the first aspect of the invention wherein the switching data input device is provided with an applied voltage register for recording a working channel applied voltage V₁ for the optical switch device of a working channel, a preceding channel applied voltage V₁₋ for the optical switch device of the preceding channel adjoining the working channel, and a succeeding channel applied voltage V₁₊ for the optical switch device of the succeeding channel adjoining the working channel, the judgment data recording device is provided with a register for storing a preceding adjoining channel voltage difference Vtc1 between the working channel applied voltage V₁ and the preceding channel applied voltage V₁- and a succeeding adjoining channel voltage difference Vtc2 between the applied voltage V₁ and the applied voltage V_{1+,} a first comparison device for comparing the absolute value of the preceding adjoining channel voltage difference Vtc1 and an adjoining channel difference judgment threshold Vtc_TH, a second comparison device for comparing the absolute value of the succeeding adjoining channel voltage difference Vtc2 and the adjoining channel difference judgment threshold Vtc_TH, and a switch count counter for incrementing a switch count Sw by "1" to update Sw when the absolute value of the preceding adjoining channel voltage difference Vtc1 is the adjoining channel difference threshold Vtc_TH or more and the absolute value of the succeeding adjoining channel voltage difference Vtc2 is the adjoining channel difference threshold Vtc_TH or more, the elapsed time recording device is an EL_T register for recording the elapsed time EL_T, the switching judgment processing device is provided with a WawcA register for storing a channel leak channel switching heat generation calculated value (WawcA value) obtained by subtracting from a product of the switching count Sw and a coefficient Wswc for deriving the amount of heat generation envisioned from the switching count Sw the product of the elapsed time EL_T and a coefficient Wswc_loss for deriving the amount of natural heat generation envisioned from the elapsed time EL_T when the elapsed time judgment device has judged that the predetermined counted time threshold Am_T has been exceeded and a comparison device for comparing the WswcA value with a predetermined WswcA threshold WswcA_TH, the values of the Sw register and the EL_T register are cleared when the subtraction ends, and the electrode voltage application device applies voltage for switching the optical switch devices based on the switching data to the optical switch devices when the WswcA value is smaller than the predetermined WswcA threshold WswcA_TH and sends a switching failure notice to the path data switching instruction device when the WswcA value is the predetermined WswcA threshold WswcA_TH or more.

According to the present invention, by rejecting continuous high speed requests for switching by certain criteria, it is possible to keep down the frequency of occurrence of leakage current, so it is possible to keep down a rise in temperature of the optical switches and stably control and operate EO-SWs.

### BRIEF DESCRIPTION OF THE DRAWINGS

These and other objects and features of the present invention will become clearer from the following description of the preferred embodiments given with reference to the attached drawings, wherein:
FIG. 1 is a perspective view of one known optical switch device;
FIG. 2 is a block diagram of the configuration of a conventional control system of a two-channel optical switch;
FIG. 3 is a flowchart for explaining the operation of the conventional control system of the two-channel optical switch shown in FIG. 2;
FIG. 4 is a graph for explaining the operation of the conventional control system of the two-channel optical switch shown in FIG. 2;

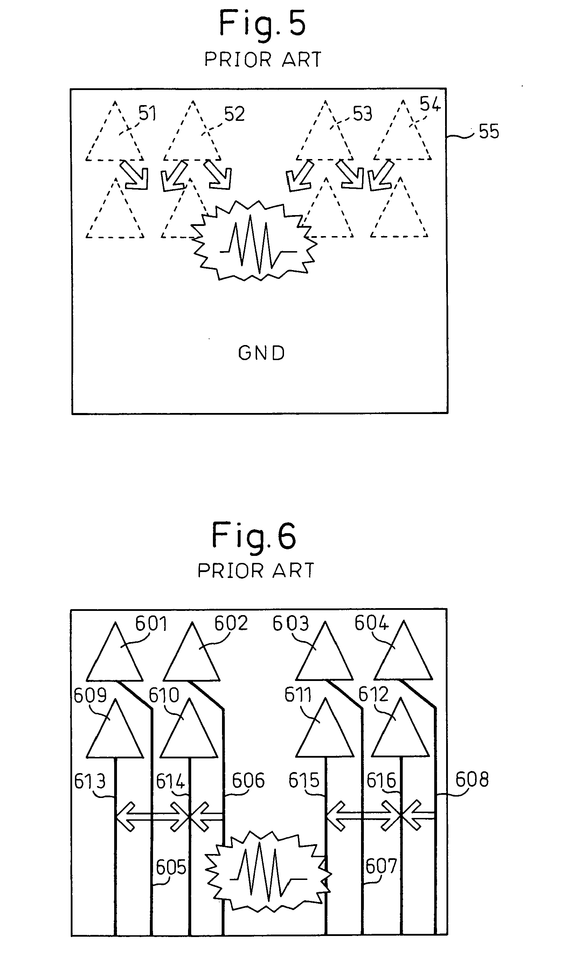

FIG. 5 is a view of the state where electrodes of optical switch devices leak current to a ground plate;
FIG. 6 is a view of the leakage currents generated between wires connected to electrodes of the optical switch devices;
FIG. 7 is a graph showing the states of the leakage current and heat generation when the conventional control system of an optical switch performs high speed, continuous switching operations;

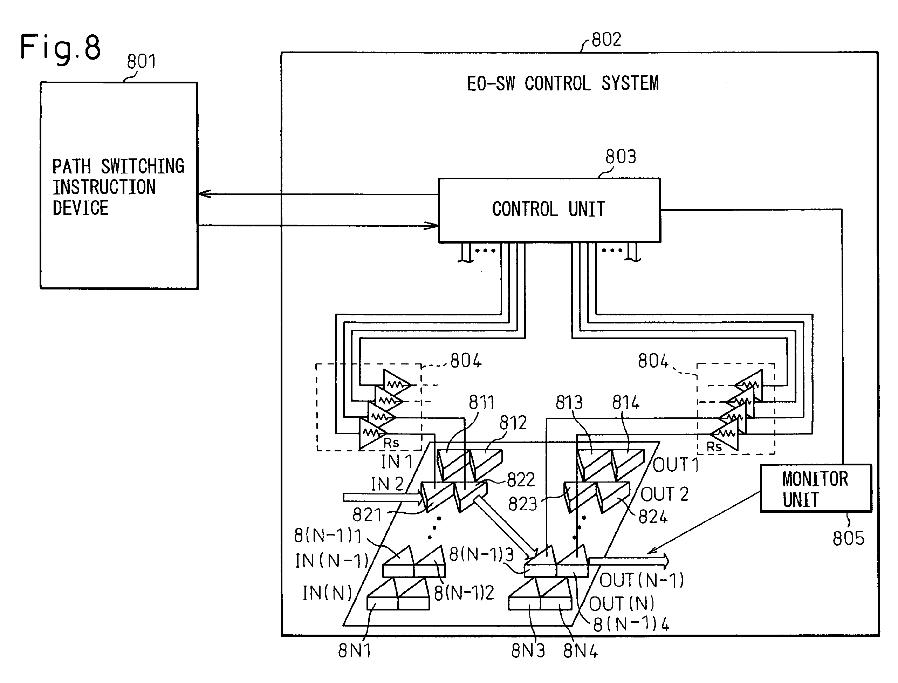

FIG. 8 is a block diagram showing the schematic configuration of a control system of a multichannel optical switch according to an embodiment of the present invention;

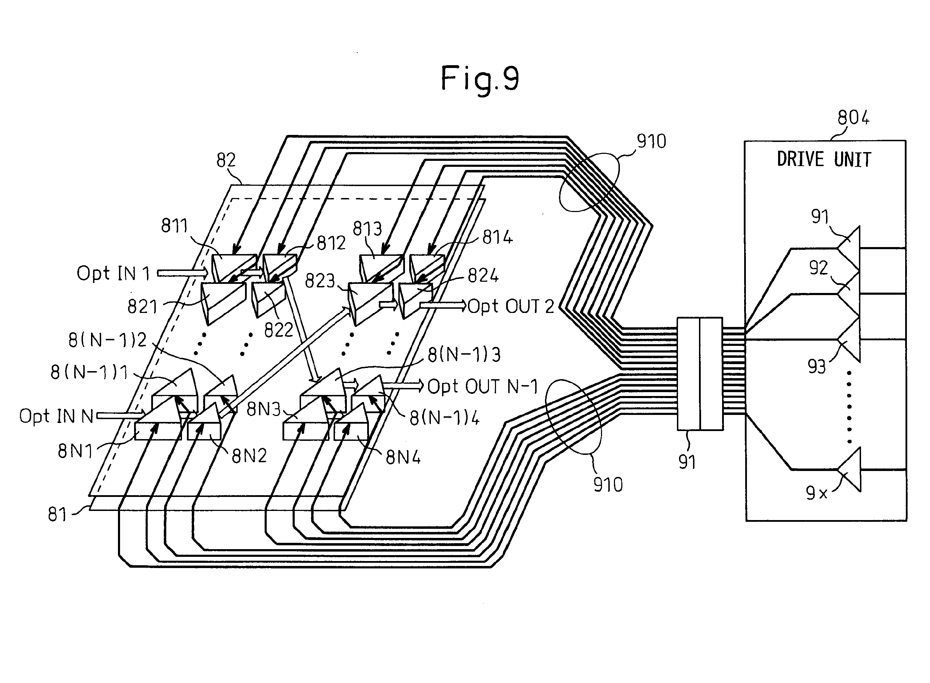

FIG. 9 is an enlarged view of part of FIG. 8;

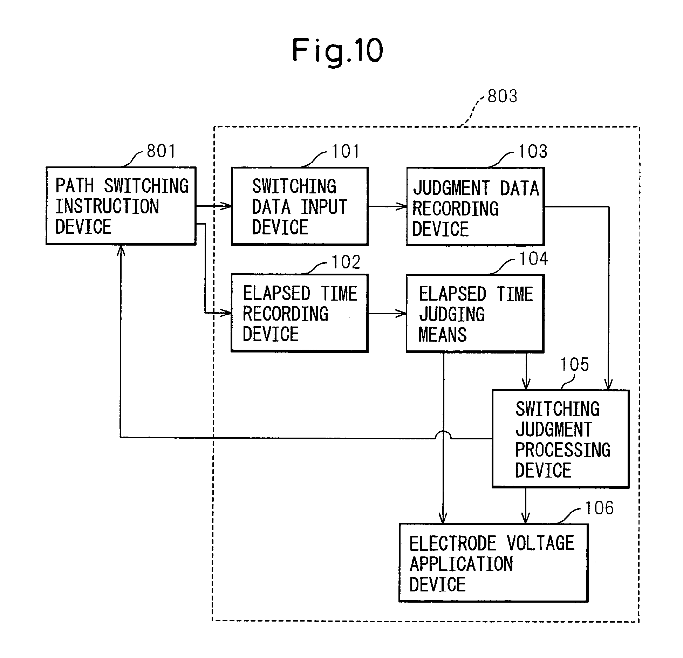

FIG. 10 is a block diagram of the configuration of a control unit in an EO-SW control system shown in FIG. 8;

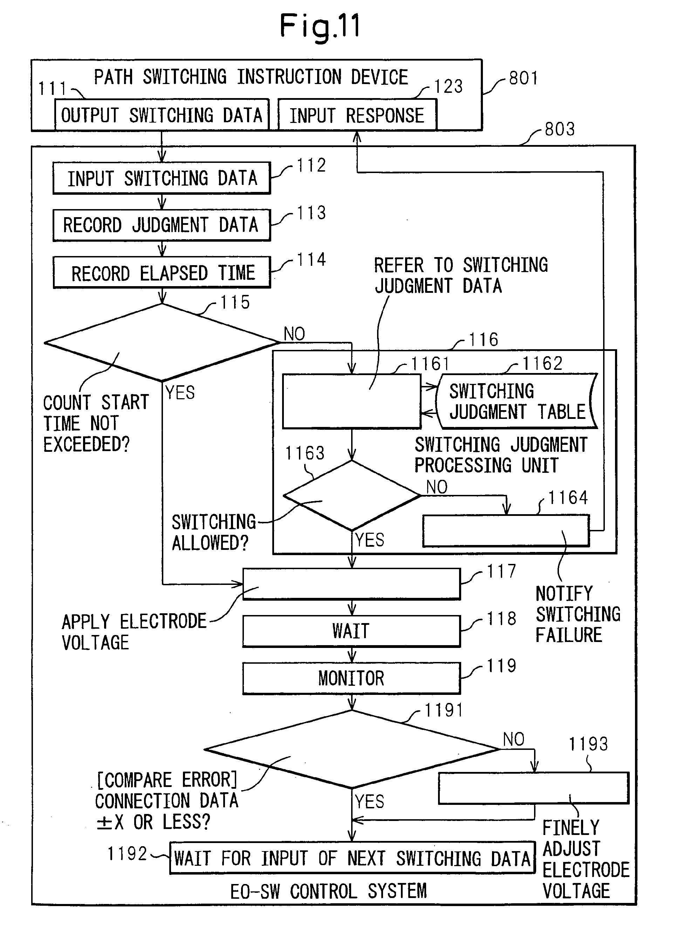

FIG. 11 is a flowchart for explaining the operation of the control unit shown in FIG. 10;

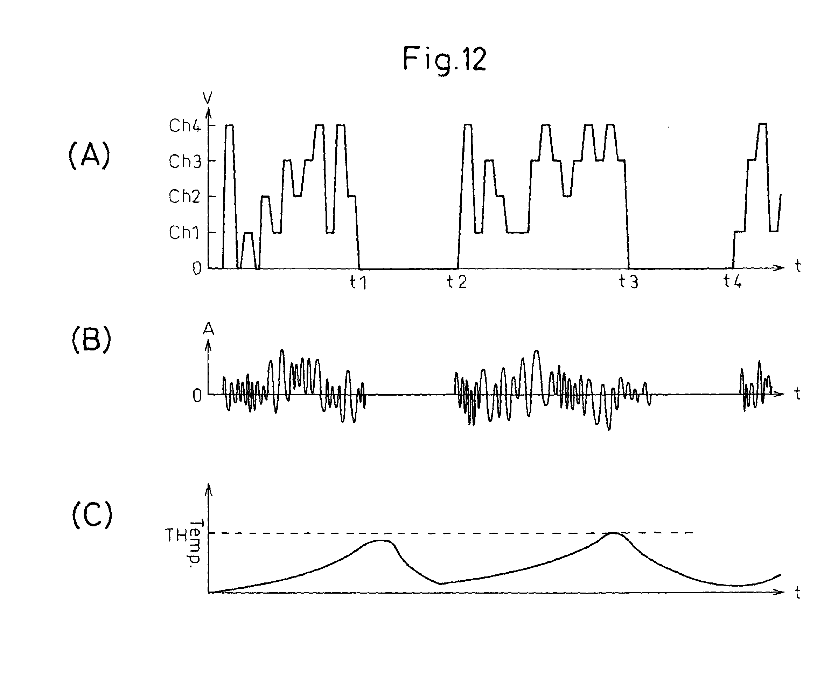

FIG. 12 is a graph showing the relationship among the applied voltage, the generation of leakage current, and the heat generation of optical switch devices due to the processing shown in FIG. 11;

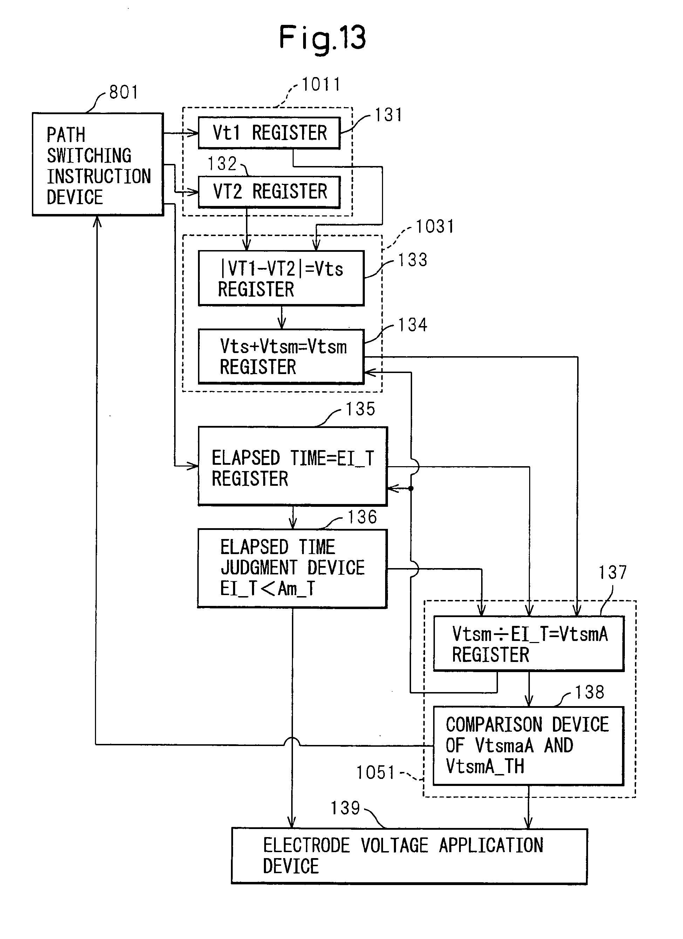

FIG. 13 is a block diagram showing the configuration of a control system of a multichannel optical switch according to Example 1 of the present invention;

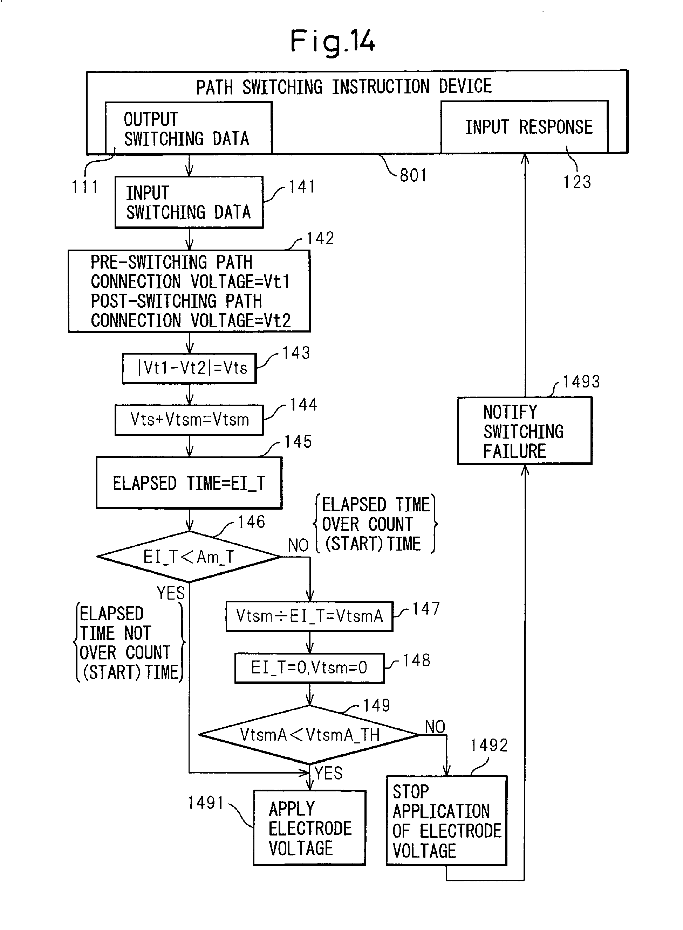

FIG. 14 is a flowchart for explaining the operation of the control system of a multichannel optical switch according to Example 1 shown in FIG. 13;

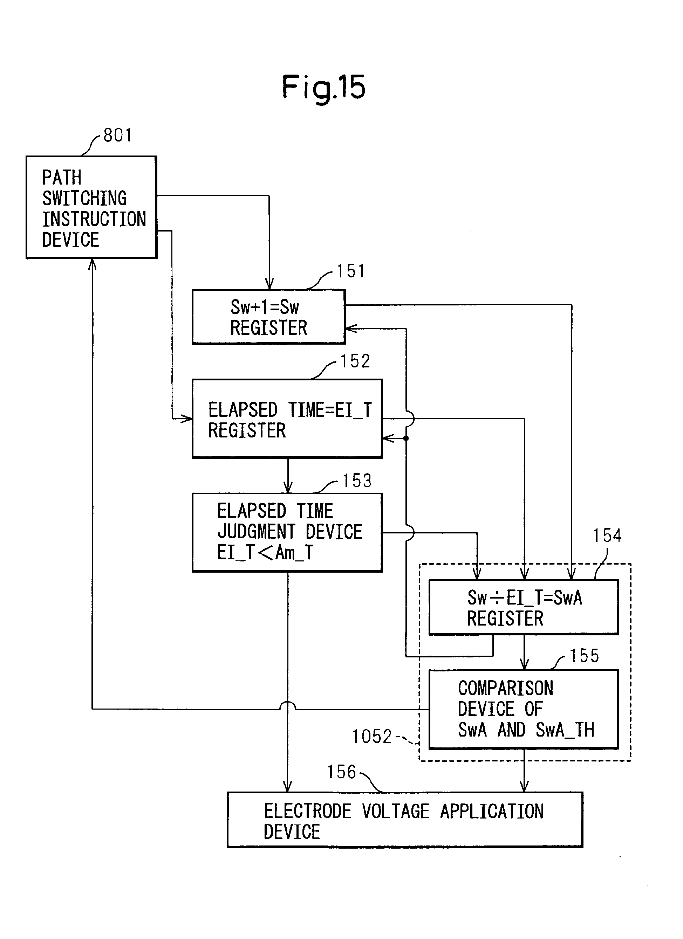

FIG. 15 is a block diagram showing the configuration of a control system of a multichannel optical switch according to Example 2 of the present invention;

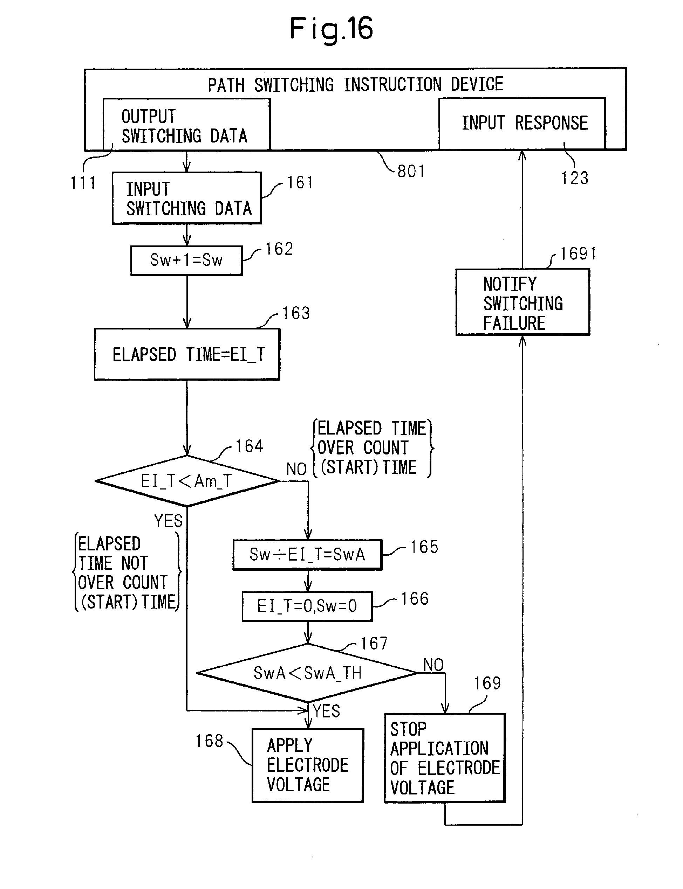

FIG. 16 is a flowchart for explaining the operation of the control system of a multichannel optical switch according to Example 2 shown in FIG. 15;

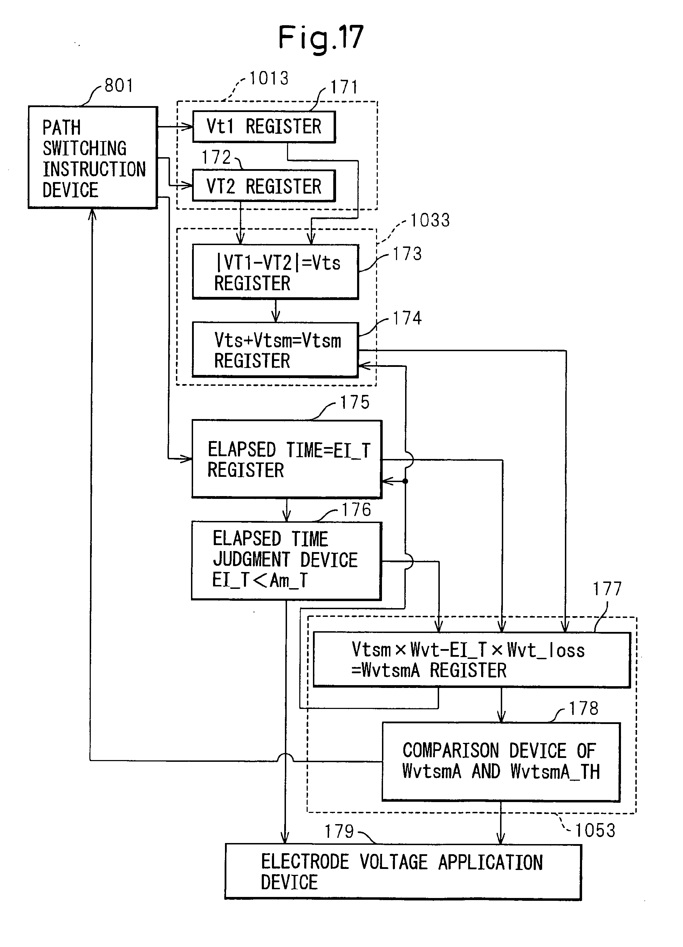

FIG. 17 is a block diagram showing the configuration of a control system of a multichannel optical switch according to Example 3 of the present invention;

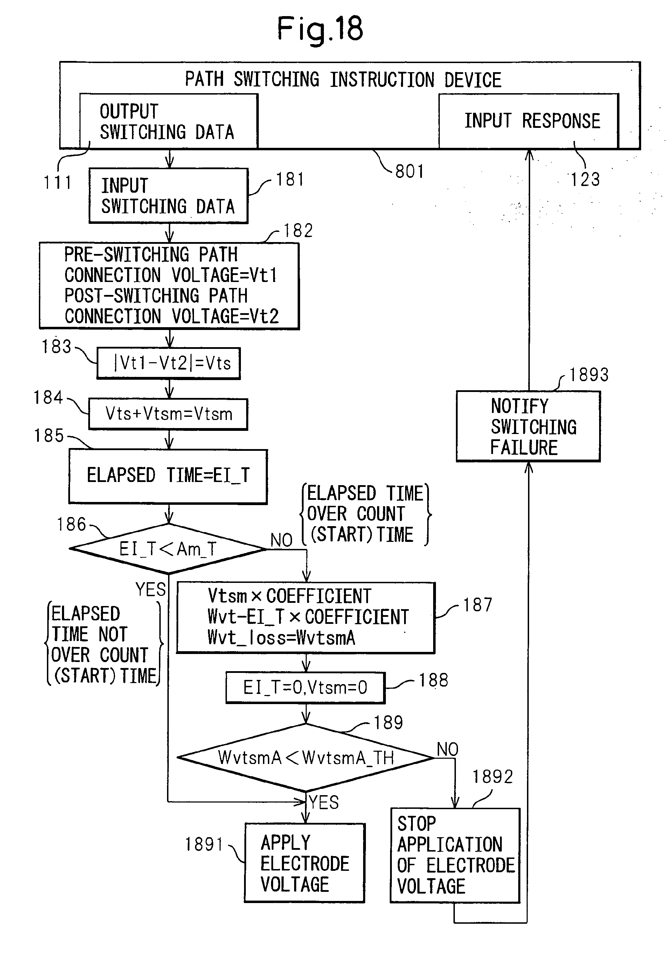

FIG. 18 is a flowchart for explaining the operation of the control system of a multichannel optical switch according to Example 3 shown in FIG. 17;

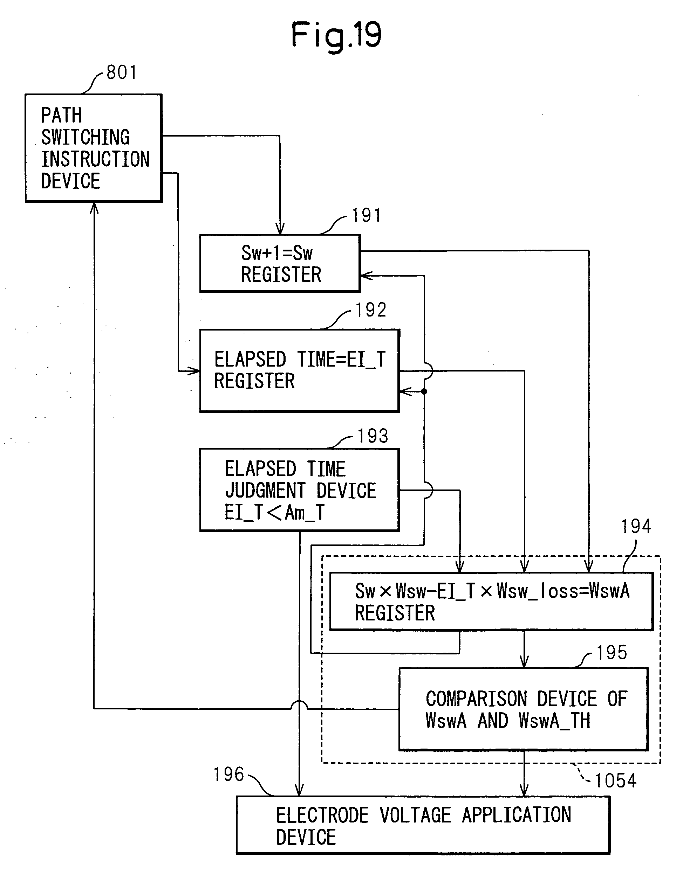

FIG. 19 is a block diagram showing the configuration of a control system of a multichannel optical switch according to Example 4 of the present invention;

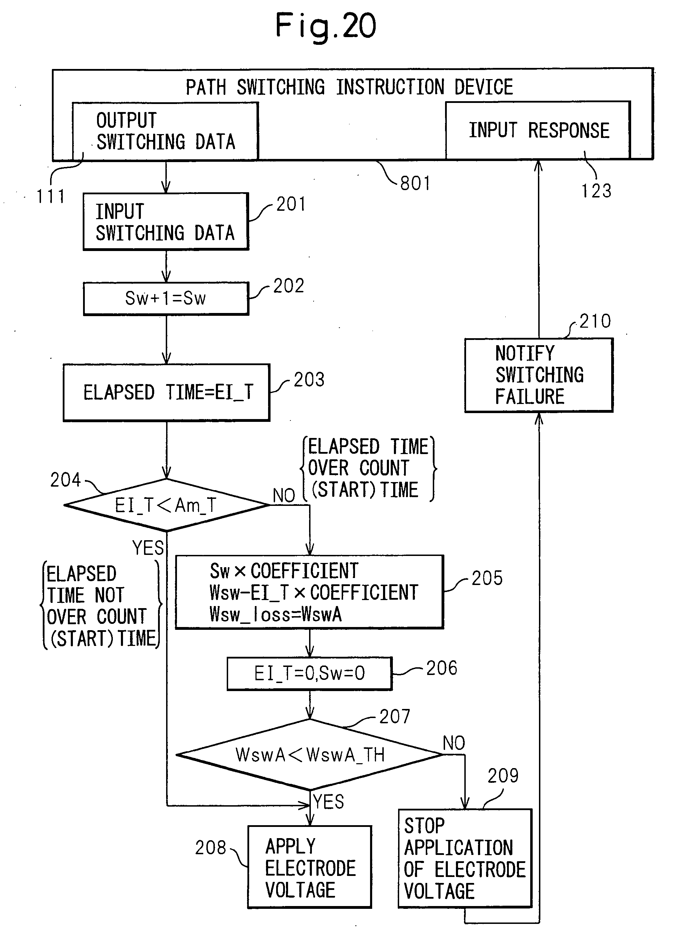

FIG. 20 is a flowchart for explaining the operation of the control system of a multichannel optical switch according to Example 4 shown in FIG. 19;

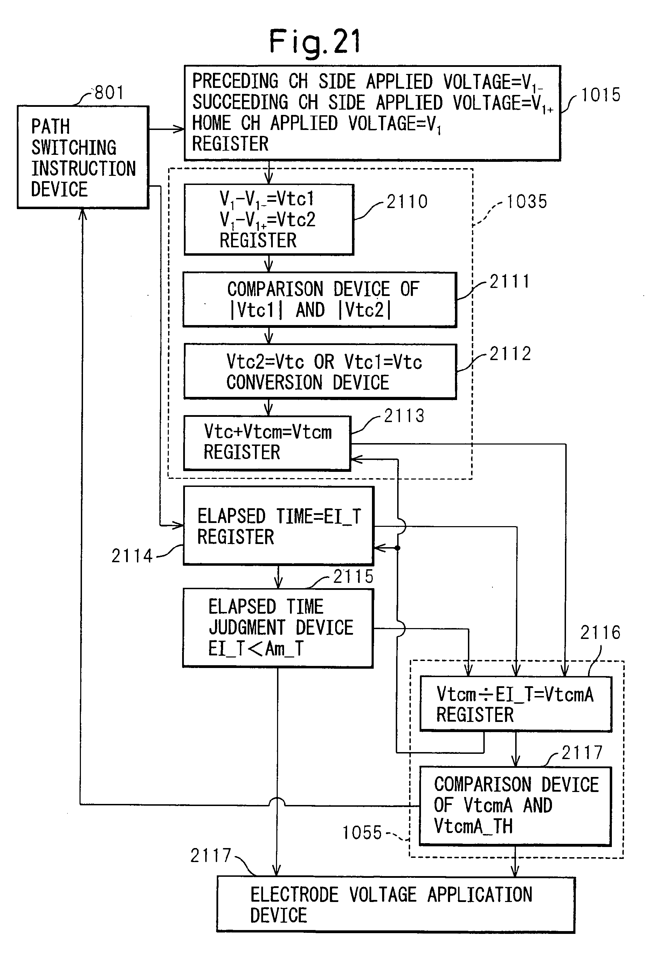

FIG. 21 is a block diagram showing the configuration of a control system of a multichannel optical switch according to Example 5 of the present invention;

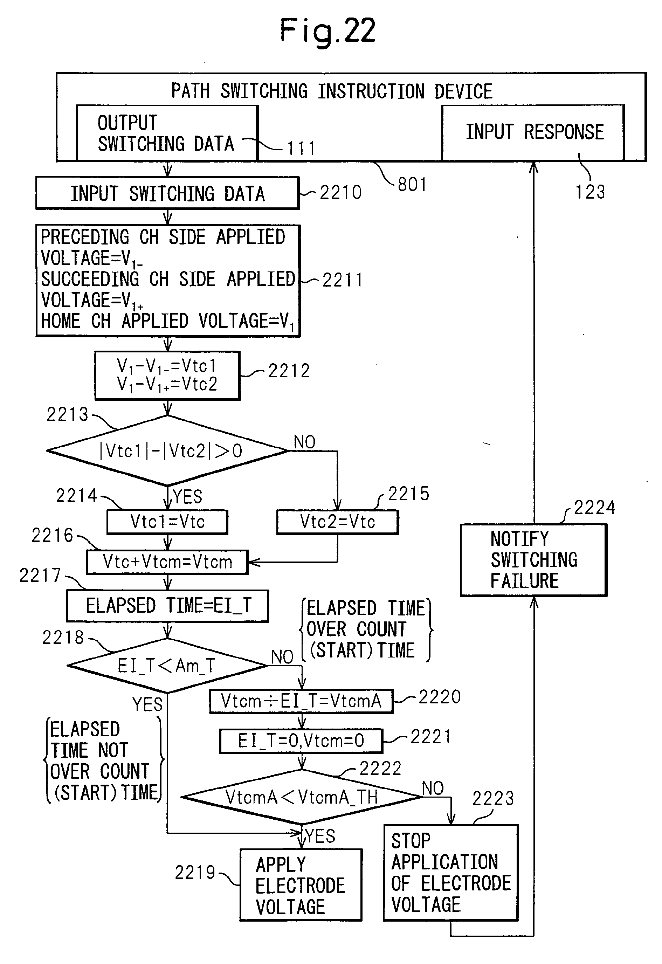

FIG. 22 is a flowchart for explaining the operation of the control system of a multichannel optical switch according to Example 5 shown in FIG. 21;

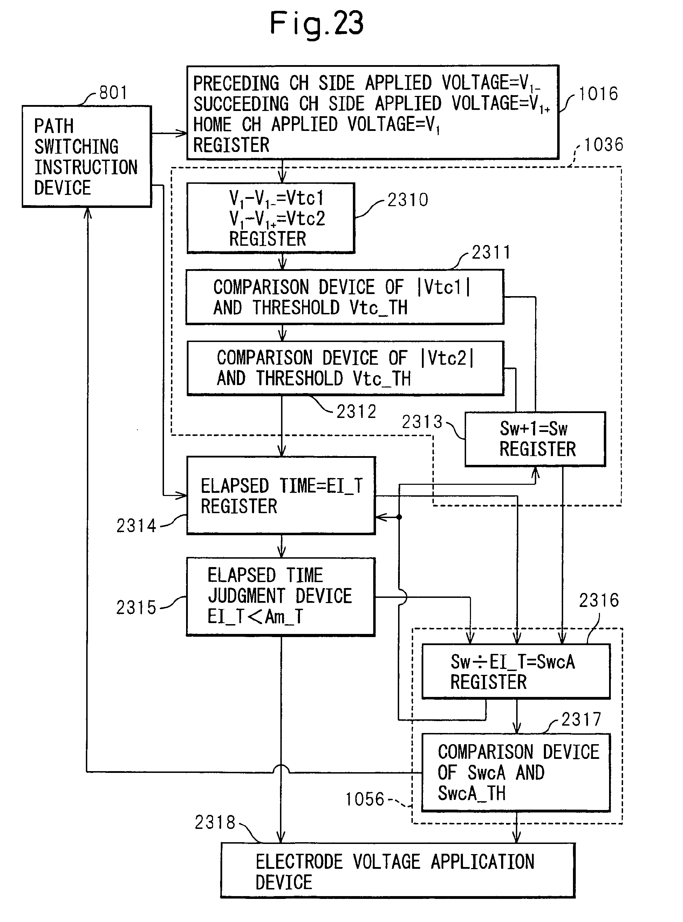

FIG. 23 is a block diagram showing the configuration of a control system of a multichannel optical switch according to Example 6 of the present invention;

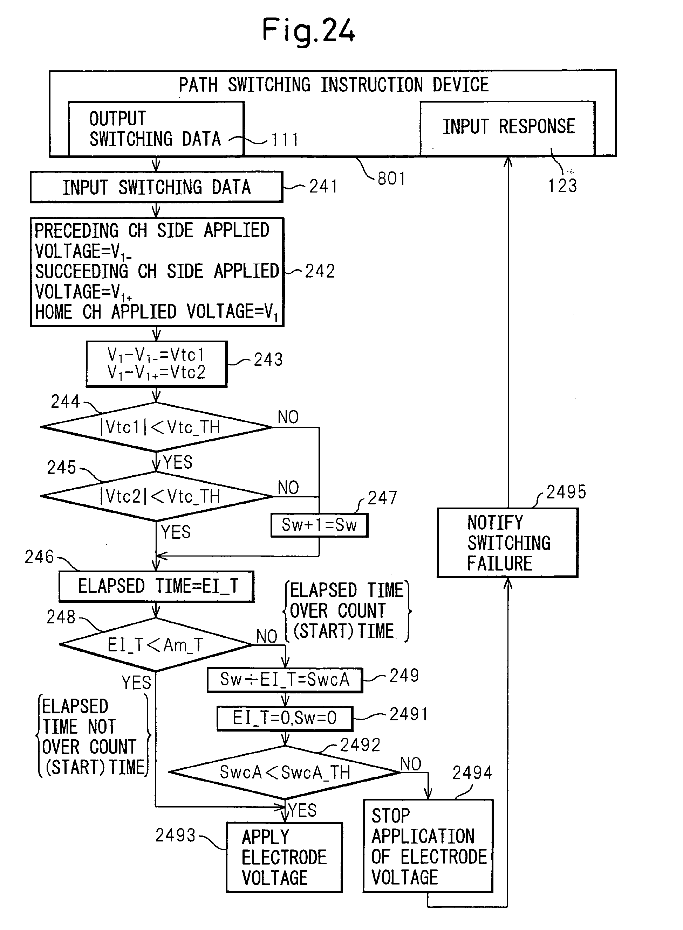

FIG. 24 is a flowchart for explaining the operation of the control system of a multichannel optical switch according to Example 6 shown in FIG. 23;

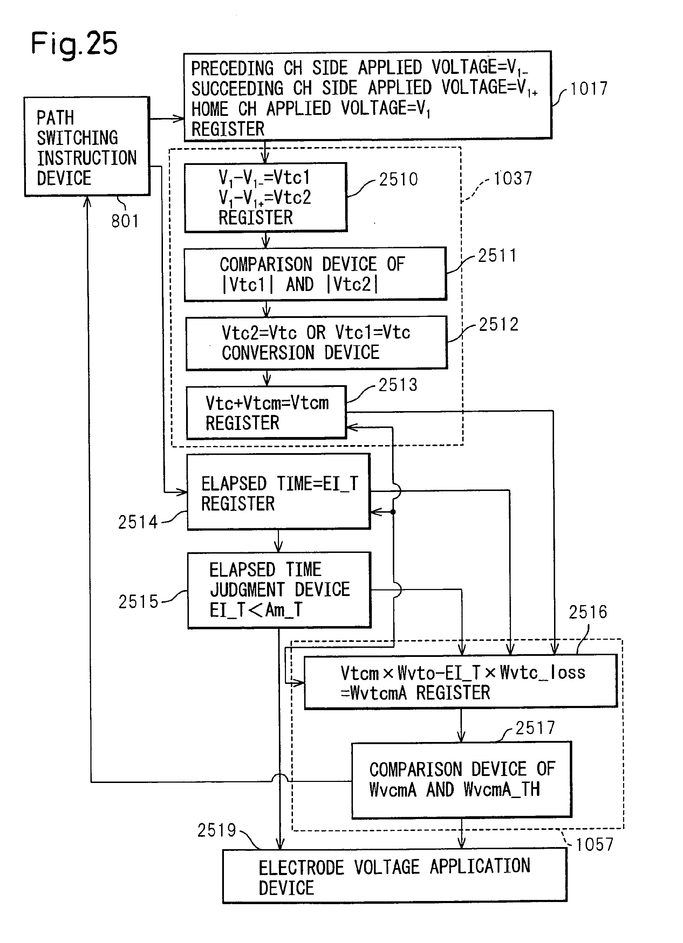

FIG. 25 is a block diagram showing the configuration of a control system of a multichannel optical switch according to Example 7 of the present invention;

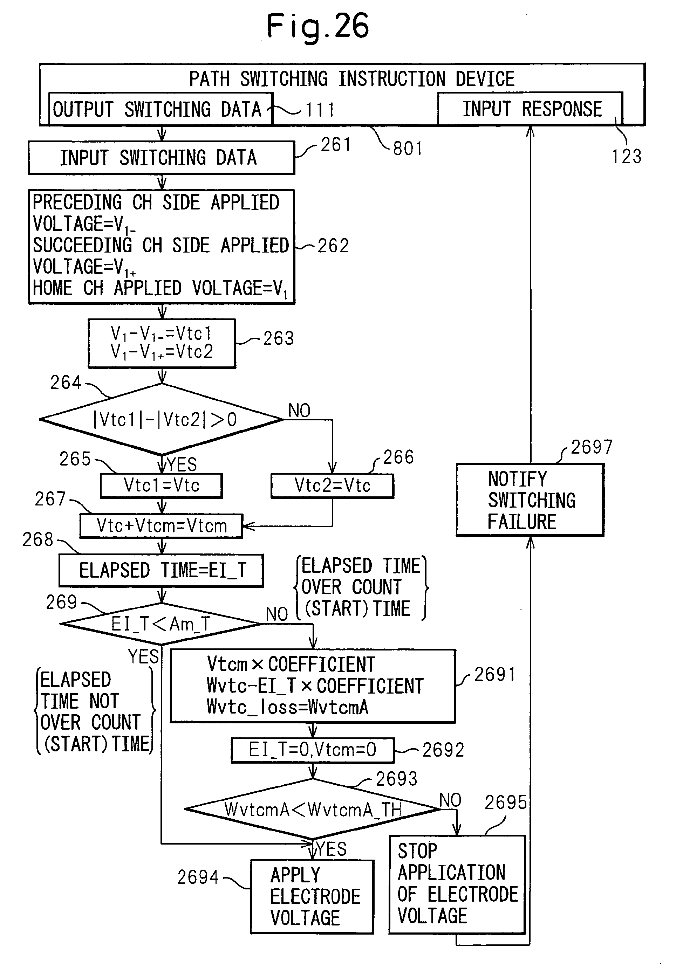

FIG. 26 is a flowchart for explaining the operation of the control system of a multichannel optical switch according to Example 7 shown in FIG. 25;

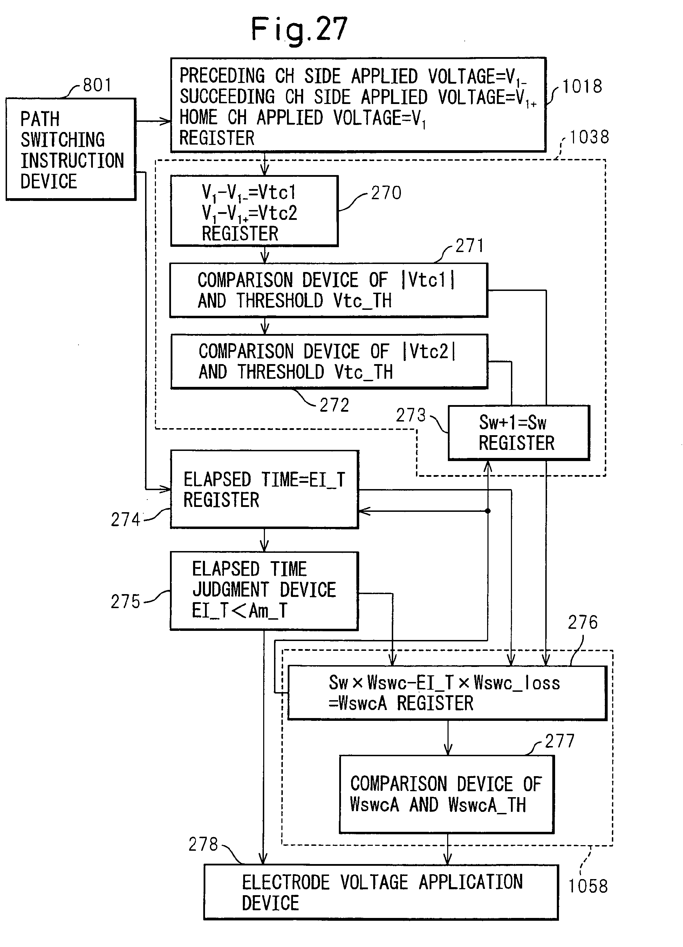

FIG. 27 is a block diagram showing the configuration of a control system of a multichannel optical switch according to Example 8 of the present invention;

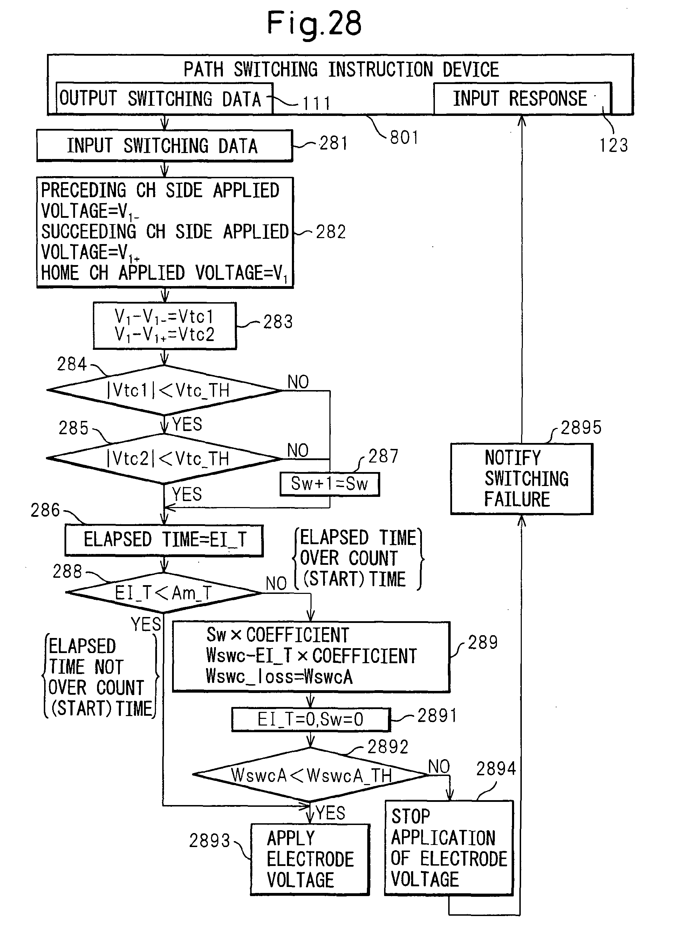

FIG. 28 is a flowchart for explaining the operation of the control system of a multichannel optical switch according to Example 8 shown in FIG. 27;

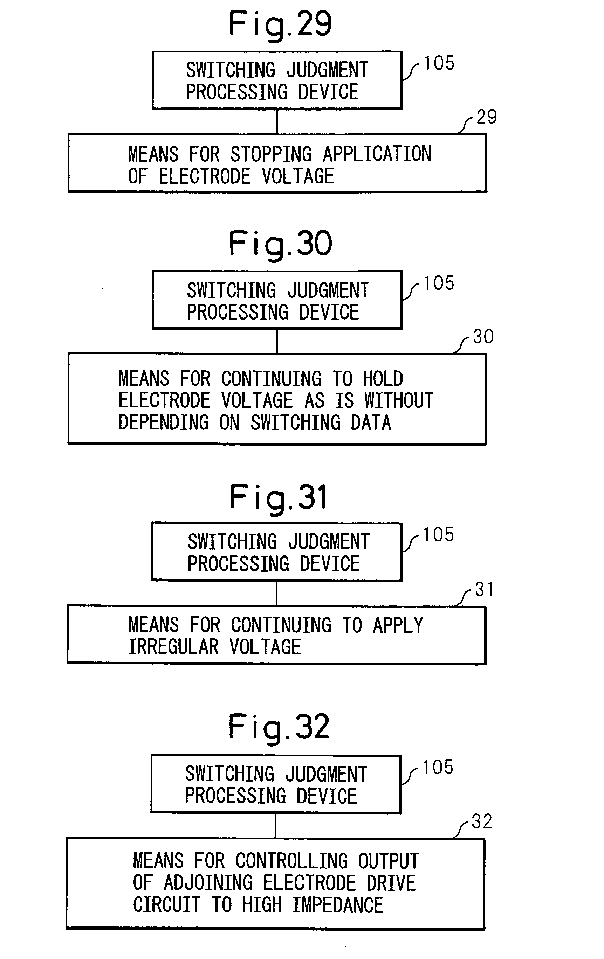

FIG. 29 is a view of means for stopping application of electrode voltage when the switching judgment processing device in Examples 1 to 8 of the present invention judges that the value is a predetermined threshold or more;
FIG. 30 is a view of an example of using another means in Example 9 of the present invention instead of the means in Examples 1 to 8;
FIG. 31 is a view of another example of using another means in Example 9 of the present invention instead of the means in Examples 1 to 8;
FIG. 32 is a view of an example of using still another means in Example 9 of the present invention instead of the means in Examples 1 to 8;

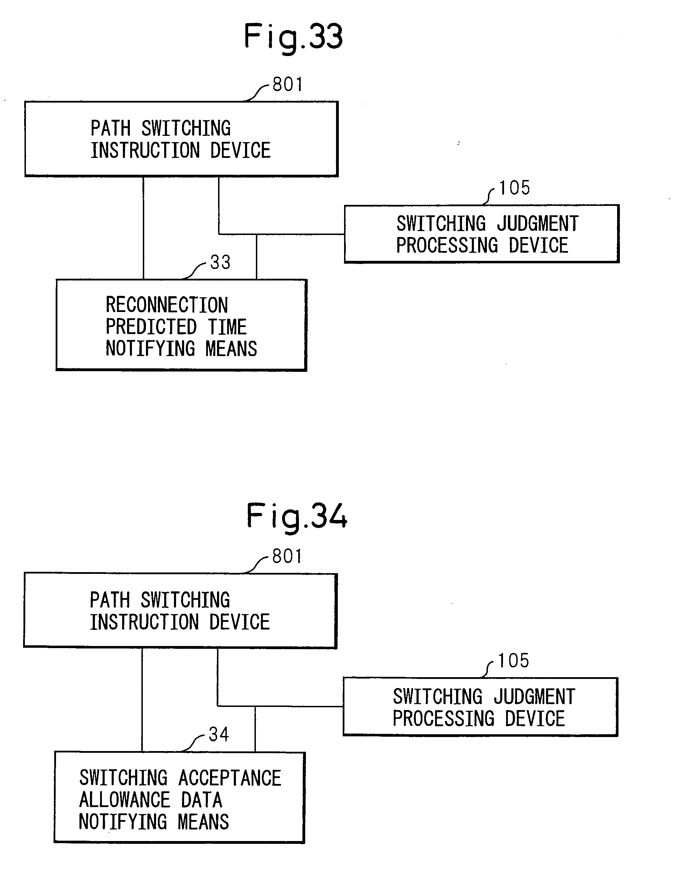

FIG. 33 is a block diagram showing part of the configuration of a control system of a multichannel optical switch according to Example 10 of the present invention;
FIG. 34 is a block diagram showing part of the configuration of a control system of a multichannel optical switch according to Example 11 of the present invention;

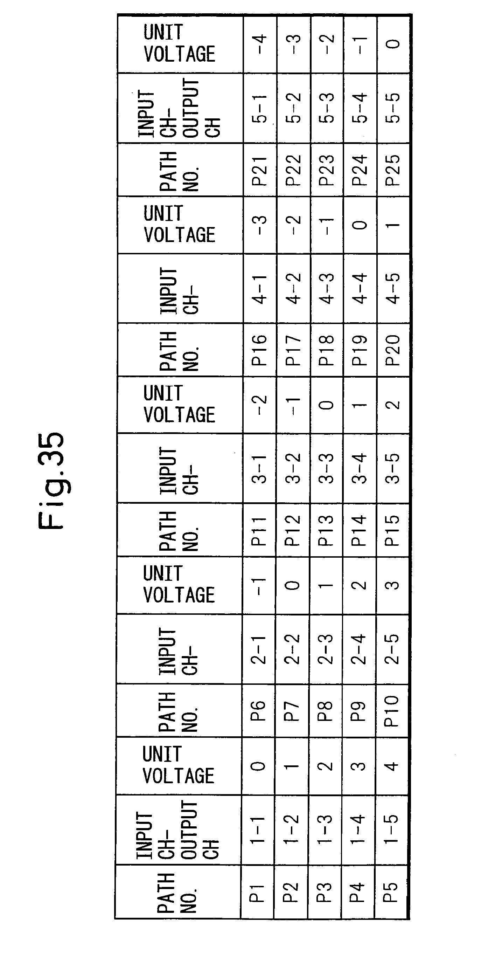

FIG. 35 is a table for explaining the relationship between the input/output channels and unit voltage for explaining Example 12 of the present invention; and

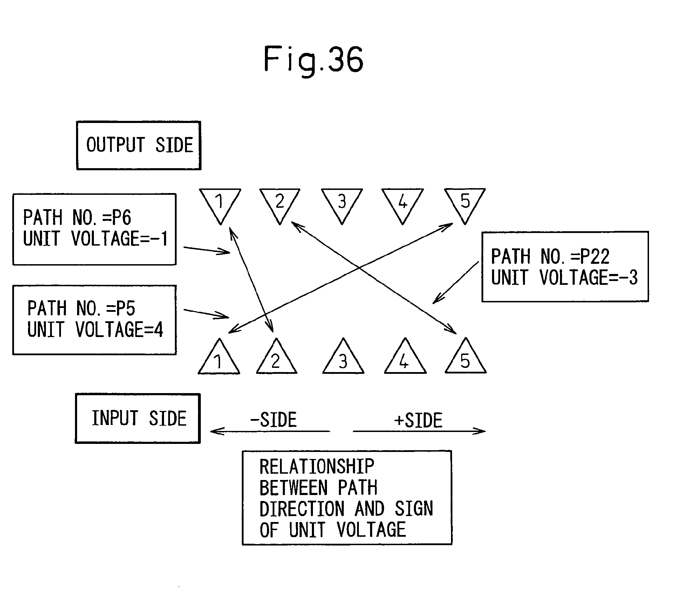

FIG. 36 is a view for explaining the relationship between the direction of a path and the sign of the unit voltage based on the table shown in FIG. 35.

### DESCRIPTION OF THE PREFERRED EMBODIMENTS

Below, embodiments of the present invention will be explained in more detail with reference to the drawings. Throughout the drawings, the same reference numbers indicate the same content.

FIG. 8 is a block diagram showing the schematic configuration of a control system of a multichannel optical switch according to an embodiment of the present invention. In the figure, 801 is a path switching instruction device and 802 is a control system of a multichannel optical switch (EO-SW control system). The EO-SW control system 802 is provided with a control unit 803, a drive unit 804, a monitor unit 805, optical switch devices 811 and 812 of a channel 1 of the input side, optical switch devices 821 and 822 of a channel 2, optical switch devices 8N1 and 8N2 of ... a channel N, optical switch devices 813 and 814 of the output side, optical switch devices 823 and 825 of the channel 2, and optical switch devices 8N3 and 8N4 of the ... channel N.

FIG. 9 is an enlarged view of a part of FIG. 8. In the figure, the optical switch devices 811 to 8N4 are arranged between a ground plate 81 and an electrode plate 82. The wires 910 are connected from the drive devices 91, 92, 93, ... 9x inside the drive unit 804 through a wire bundling unit 91 to the electrodes of the optical switch devices 811 to 8N3.

FIG. 10 is a block diagram of the configuration of the control unit 803 inside the EO-SW control system 802 shown in FIG. 8. In the figure, the control unit 803 is a control unit of the individual optical switch devices of a multichannel optical switch using devices having an electro-optical effect. The control unit 803 is provided with a switching data input device 101 for inputting switching data of the optical switch devices from the path switching instruction device 801, an elapsed time recording device 102 for recording the elapsed time EL_T from the time when the switching data started to be output from the path switching instruction device 801, a judgment data recording device 103 for recording judgment data for judging whether the optical switch devices can be switched based on the switching data, an elapsed time judgment device 104 for judging whether the elapsed time EL_T has exceeded a predetermined counted time threshold Am_T, a switching judgment processing device 105 for judging switching based on the output of the elapsed time judgment device and the output of the judgment data recording device, and an electrode voltage application device 106. When the elapsed time judgment device 104 judges that the elapsed time EL_T is shorter than the predetermined counted time threshold Am_T, the electrode voltage application device 106 applies voltage for switching the optical switch devices based on the switching data. When the elapsed time judgment device 104 judges that the elapsed time EL_T has exceeded the predetermined counted time threshold Am_T and only when the switching judgment processing device 105 judges that the predetermined switching conditions have been met, the electrode voltage application device 106 applies voltage to the optical switch devices to switch the optical switch devices based on the switching data. When the switching judgment processing device 105 judges that the predetermined switching conditions have not been met, the electrode voltage application device 106 does not apply voltage for switching the optical switch devices to the switch devices and the switching judgment processing device 105 sends a switching failure notice to the path switching instruction device 801.

FIG. 11 is a flowchart for explaining the operation of the control unit 803 shown in FIG. 10. In the figure, the path switching instruction device 801 is provided with a switching data output port 111 and a response input port 123. At step 112, the control unit 803 inputs the switching data of the switching data output port 111 into the switching data input device 101. At step 113, it records judgment data obtained based on the switching data in the judgment data recording device 103. At step 114, it records the elapsed time EL_T from the time when the switching data began to be output from the path switching instruction device 801 in the elapsed time recording device 102.

Next, at step 115, the elapsed time judgment device 104 judges whether the elapsed time EL_T has exceeded the predetermined counted time threshold Am_T. When the elapsed time EL_T has exceeded the counted time threshold Am_T, at step 116, the switching judgment processing device 105 performs the switching judgment processing. At this step 116, at step 1161, the switching judgment processing device 105 accesses the switching judgment table 1162 inside the judgment data recording device 103 to refer to the switching judgment data and, at step 1163, judges whether switching is allowed based on this switching judgment data. When not, at step 1164, it sends a switching failure notice to the response input port 123 of the path switching instruction device 801.

When switching is allowed at step 1163 and when the elapsed time EL_T does not exceed the counted time threshold Am_T at step 115, at step 117, the control unit supplies voltage to the electrodes of the correspondingly optical switch devices. After this, in a similar manner, at step 118, it waits for a certain time, then, at step 119, performs monitoring. At 1191, it compares the error to determine if the error between the connection data and the actually connected electrodes is within a certain range. If this error is within a certain range, at step 1192, it waits for the input of the next switching data. If outside the certain range, at step 1193, it finely adjusts the voltage applied to the corresponding electrodes, then at step 121 waits for the input of the next switching data.

In the comparison of error at step 1191, the control unit performs correction processing to correct for aging of the EO-SW, fluctuations in temperature, and other factors causing fluctuation so that the applied voltage becomes constantly optimal.

FIG. 12 is a graph showing the relationship among the applied voltage, generation of leakage current, and heat generation of optical switch devices due to the processing shown in FIG. 11. In the figure, as shown by (A), the control unit stops application of voltage to the electrodes between the time t1 to t2 and between t3 to t4, whereby, as shown by (B), no leakage current is generated any longer during those intervals and, consequently, as shown by (C), the temperature of the optical switch devices no longer exceeds the threshold TH.

### Example 1

FIG. 13 is a block diagram showing the configuration of a control system of a multichannel optical switch according to Example 1 of the present invention. In the figure, the switching data input device 101 of FIG. 10 is realized by a switching data input device 1011 and is provided with a pre-connection path connection voltage register (Vt1 register) 131 for recording a voltage Vt1 applied by the path connection of before switching of the optical switch devices and a post-connection path connection voltage register (Vt2 register) 132 for recording a voltage V2 applied by the path connection of after switching of the optical switch devices.

The judgment data recording device 103 of FIG. 10 is realized in Example 1 by a judgment data recording device 1031 and is provided with a connection difference temporary recording register (Vts register) 133 for recording an absolute value Vts of the difference between the voltage Vt1 and voltage Vt2 and a connection voltage storage register (Vtsm register) 134 for adding the value stored in the Vts register to the switching channel difference sum Vtsm to update the switching channel difference sum Vtsm.

The elapsed time recording device 104 of FIG. 10 is realized in Example 1 by an elapsed time count up register (EL_T register) 135 for recording the elapsed time EL_T. The switching judgment processing device 105 of FIG. 10 is realized by a switching judgment processing device 1051 and is provided with a unit time connection voltage difference storage register (VtsmA register) 137 for storing a value VtsmA obtained by dividing the Vtsm value by the elapsed time EL_T when the elapsed time judgment device 136 judges that a predetermined counted time threshold Am_T has been exceeded and a comparison device 138 for comparing the VtsmA value and a predetermined electrode voltage application judgment threshold Vtsma_TH. The values of the EL_T register 135 and Vtsm register 134 are cleared to for example 0 to be initialized when the above division for storing the value VtsmA in the VtsmA register 137 ends.

The electrode voltage application device 106 of FIG. 10 is realized in this example by an electrode voltage application device 139. When the VtsmA value inside the VtsmA register 137 is smaller than a predetermined electrode voltage application judgment threshold VtsmA_TH, it applies voltage for switching of the optical switch devices based on the switching data to the optical switch devices, while when the VtsmA value inside the VtsmA register 137 is the predetermined electrode voltage application judgment threshold VtsmA_TH or more, it sends a switching failure notice to the path switching instruction device.

FIG. 14 is a flowchart for explaining the operation of the control system of a multichannel optical switch according to Example 1 shown in FIG. 13. In the figure, at step 141, the system inputs switching data from the switching data output port 111 into the switching data input device 1011, while at step 142, it records a pre-switching path connection voltage VT1 in the Vt1 register 131 and records a post-switching path connection voltage Vt2 in the Vt2 register 132 based on the switching data.

Next, at step 143, the system records the absolute value of the difference of VT1 and VT2 in the Vts register 133, while at step 144, it performs the operation Vts+Vtsm=Vtsm to update the value of the Vtsm register 134. The initial value of Vtsm is for example 0. Next, at step 145, it records the elapsed time EL_T from the time after the switching data starts to be output from the path switching instruction device 801 in the elapsed time recording device (EI_T register) 102.

Next, at step 146, the system uses the elapsed time judgment device 136 to judge whether the elapsed time EL_T has exceeded the predetermined counted time threshold Am_T. When the elapsed time EL_T has exceeded the counted time threshold Am_T, at step 147, it divides the Vtsm by EI_T and records the resultant VtsmA in the VtsmA register 137. Next, at step 148, it for example clears the values of the ET_T register 145 and Vtsm register 144 to 0 to initialize them.

Next, at step 149, the system uses the comparison device 138 to compare the VtsmA value with the connection voltage difference threshold VtsmA_TH. If VtsmA<VtsmA_TH, then at step 1491, the system supplies voltage to the electrodes of the corresponding optical switch devices. If VtsmA≥VtsmA_TH, then at step 1492, the system stops the application of electrode voltage and, at step 1493, notifies switching failure to the response input port 123 of the path switching instruction device 801.

### Example 2

FIG. 15 is a block diagram of the configuration of a control system of a multichannel optical switch according to Example 2 of the present invention. In the figure, the switching data input device 101 of FIG. 10 is realized in Example 2 by an Sw register 151 for recording the switching count Sw of the optical switch devices. The elapsed time recording device 102 of FIG. 10 is realized in Example 2 by an elapsed time count up register (EL_T register) 152 for recording the elapsed time EL_T in the same way as Example 1, while the judgment data recording device 103 of FIG. 10 is realized in Example 2 by an EI_T<Am_TH comparison device 153 in the same way as Example 1. The switching judgment processing device 105 of FIG. 10 is realized in Example 2 by a switching judgment processing device 1052 and is provided with a unit time switching time storage register (SwA register) 154 for storing the SwA value obtained by dividing the switching count Sw by the elapsed time EL_T when the comparison device 153 judges the predetermined counted time threshold Am_T is exceeded and a comparison device 155 for comparing the SwA value and a predetermined switching channel count threshold SwA_TH. The electrode voltage application device 106 of FIG. 10 is realized in Example 2 by an electrode voltage application device 156.

The values of the Sw register 151 and the EL_T register 152 are for example cleared to 0 to be initialized when the division at the SwA register 154 ends. The electrode voltage application device 156 applies voltage for switching the optical switch devices based on the switching data to the optical switch devices when the SwA value is smaller than the predetermined switching channel count threshold SwA_TH and sends a switching failure notice to the path switching instruction device when the SwA value is the predetermined switching channel count threshold SwA_TH or more.

FIG. 16 is a flowchart for explaining the operation of the control system of a multichannel optical switch according to Example 2 shown in FIG. 15. In the figure, at step 161, the system inputs switching data from the switching data output port 111 into the Sw register 151. In the example, the switching data is only data for notifying the fact that the optical switch devices have been switched. Next, at step 162, the system increments the switching count Sw to update it. That is, after the switching data of a path is input for a predetermined channel, the system increments the value of the Sw register 151 by one. For example, in a state where a path is laid between the input channel 1 and output channel 3, if switching from the input channel 1 to the output party 2, the system increments the value of the Sw register 151 by exactly one. Next, at step 163, the system records the elapsed time EL_T from when the switching data starts to be output from the path switching instruction device 801 in the elapsed time count up register (EI_T register) 152.

Next, at step 164, the system uses the judgment device 153 to judge whether the elapsed time EL_T has exceeded the predetermined counted time threshold Am_T. When the elapsed time EL_T has exceeded the counted time threshold Am_T, at step 165, the system divides the switching count Sw by the EI_T and records the result SwA in the unit time switching count storage register (SwA register) 154. Next, at step 166, it for example clears the values of the ET_T register 152 and the Sw register 151 to 0 to initialize them.

Next, at step 167, the system compares the SwA value with the connection voltage difference threshold SwA_TH. If SwA<SwA_TH, then at step 168, it supplies voltage to the electrodes of the corresponding optical switch devices. If SwA≥SwA_TH, then at step 169, the system stops the application of the electrode voltage, then at step 1691 it notifies switching failure to the response input port 123 of the path switching instruction device 801.

### Example 3

FIG. 17 is a block diagram showing the configuration of a control system of a multichannel optical switch according to Example 3 of the present invention. In the figure, the Vt1 register 131 and the Vt2 register 132 inside the switching data input device 1011 in Example 1 shown in FIG. 13 are the same as a Vt1 register 171 and a Vt2 register 172 in a switching data input device 1013 in Example 3. Furthermore, the Vts register 133 and the Vtsm register 134 in the judgment data recording device 1031 in Example 1 shown in FIG. 13 are the same as a Vts register 173 and a Vtsm register 174 in Example 3. Further, the elapsed time recording device 102 and the elapsed time judgment device 104 in FIG. 10 are the same as the EI_T register 175 and the EI_T<Am_TH comparison device 176 as in Example 3. The point of difference between Example 1 and Example 3 is that, in Example 3, the switching judgment processing device 1051 of Example 1 is replaced with a switching judgment processing device 1053 of a different configuration. The electrode voltage application device 106 of FIG. 10 is realized in Example 3 by an electrode voltage application device 179.

The switching judgment processing device 1053 in Example 3 is provided with a unit time wattage storage register (WvtsmA register) 177 for storing a WvtsmA value obtained by subtracting from a product of a switching channel difference sum Vtsm and a coefficient Wvt for deriving the natural heat discharge envisioned from that switching channel difference sum Vtsm (coefficient for conversion of wattage generated there based on Vtsm) the product of the elapsed time EL_T and a coefficient Wvt_loss for deriving the amount of natural heat discharge envisioned from the elapsed time EL_T (coefficient for conversion of wattage discharged there based on EL T) when the elapsed time judgment device 176 judges that a predetermined counted time threshold Am_T has been exceeded and a comparison device 178 for comparing the WvtsmA value with a predetermined WvtsmA threshold WvtsmA_TH.

The value of the Vtsm register 174 and the value of the EL_T register 175 are for example cleared to 0 to be initialized when the subtraction for obtaining WvtsmA ends. The electrode voltage application device 179 applies voltage for switching the optical switch devices based on switching data to the optical switch devices when the WvtsmA value is smaller than a predetermined electrode voltage application judgment WvtsmA threshold WvtsmA_TH and sends a switching failure notice to the path switching instruction device when the WvtsmA value is the WvtsmA threshold WvtsmA TH or more.

FIG. 18 is a flowchart for explaining the operation of the control system of a multichannel optical switch according to Example 3 shown in FIG. 17. In the figure, step 181 to step 186 are the same as step 141 to step 146 in Example 1 shown in FIG. 14. Here, the explanations will be omitted.

In Example 3, at step 187, the switching judgment processing device 1053 subtracts from a product of a switching channel difference sum Vtsm and a coefficient Wvt for deriving the natural heat discharge envisioned from that switching channel difference sum Vtsm the product of the elapsed time EL_T and a coefficient Wvt_loss for deriving the amount of natural heat discharge envisioned from the elapsed time EL_T when the elapsed time judgment device 176 judges that a predetermined counted time threshold Am T has been exceeded and stores this WvtsmA value of the result of subtraction in the WvtsmA register 177.

When the subtraction for obtaining the WvtsmA value ends, at step 188, the system for example clears the value of the Vtsm register 184 and the value of EL_T register 185 to 0 to initialize them. Next, at step 189, it compares the WvtsmA value and the predetermined electrode voltage application judgment WvtsmA threshold WvtsmA_TH by the comparison device 178. When the WvtsmA value is smaller than the predetermined electrode voltage application judgment WvtsmA threshold WvtsmA_TH, at step 1891, it applies voltage for switching the optical switch devices based on the switching data to the optical switch devices, while when the WvtsmA value is the WvtsmA threshold WvtsmA_TH or more, at step 1892, it stops the application of electrode voltage, then, at step 1893, sends a switching failure notice to the response input port 123 of the path switching instruction device 801.

### Example 4

FIG. 19 is a block diagram of the configuration of a control system of a multichannel optical switch according to Example 4 of the present invention. In the figure, an Sw register 191, EI_T register 192, and EI_T<m_TH comparison device 193 are the same as the Sw register 151, EI_T register 152, and EI_T<m_TH comparison device 153 in Example 2 shown in FIG. 15. Here, the explanations are omitted. The electrode voltage application device 106 of FIG. 10 is realized in Example 4 by an electrode voltage application device 196. The point of difference with Example 2 shown in FIG. 15 is that, in Example 4, the switching judgment processing device 1052 in Example 2 is replaced with a switching judgment processing device 1054 of a different configuration. The rest of the configuration is the same as Example 2.

The switching judgment processing device 1054 in Example 4 is provided with a unit time wattage storage register (WswA register) 194 for storing a WswA value obtained by subtracting from a product of a switching count Sw and a coefficient Wsw for deriving the amount of heat generation envisioned from that switching count Sw (coefficient for conversion of wattage generated there based on Sw) the product of the elapsed time EL_T and a coefficient Wsw_loss for deriving the amount of natural heat generation envisioned from the elapsed time EL_T (coefficient for conversion of wattage discharged there based on EL_T) when the elapsed time judgment device 193 judges that a predetermined counted time threshold Am_T has been exceeded and a comparison device 195 for comparing the WswA value with a predetermined WswA threshold WswA_TH.

FIG. 20 is a flowchart for explaining the operation of the control system of a multichannel optical switch according to Example 4 shown in FIG. 19. In the figure, step 201 to step 204 are the same as step 161 to step 164 in Example 2 shown in FIG. 16. Here, the explanations will be omitted.

In Example 4, at step 205, the WswA register 194 inside the switching judgment processing device 1054 subtracts from a product of a switching count Sw and a coefficient Wsw for deriving the amount of heat generation envisioned from that switching count Sw the product of the elapsed time EL_T and a coefficient Wsw_loss for deriving the amount of natural heat generation envisioned from the elapsed time EL_T when the elapsed time judgment device 193 judges that a predetermined counted time threshold Am_T has been exceeded. Further, the control system records the obtained WSwA value in the WswA register 194. Next, at step 206, it for example clears the value of the Sw register 191 and the value of the EL_T register 192 to 0 to initialize them when the above subtraction ends. Next, at step 207, it compares the WSwA value and the predetermined WswA threshold WswA_TH by the comparison device 195. When the WSwA value is smaller than the predetermined WswA threshold WswA_TH, at step 208, it applies voltage for switching the optical switch devices based on the switching data to the optical switch devices. When the WSwA value is the predetermined WswA threshold WswA_TH or more, at step 209, it stops the application of the electrode voltage and, at step 210, sends a switching failure notice to the response input port 123 inside the path switching instruction device 801.

### Example 5

FIG. 21 is a block diagram of the configuration of a control system of a multichannel optical switch according to Example 5 of the present invention. In the figure, the switching data input device 101 of FIG. 10 is realized in Example 5 by a switching data input device 1015 and is provided with an applied voltage register for temporarily storing a working channel applied voltage V₁ for the optical switch device of a working channel, a preceding channel applied voltage V₁- for the optical switch device of the preceding channel adjoining the working channel (for example, if the working channel is CH3, the adjoining preceding channel would be CH2), and a succeeding channel applied voltage V₁₊ for the optical switch device of the succeeding channel adjoining the working channel (for example, if the working channel is CH3, the adjoining succeeding channel would be CH4).

Further, the judgment data recording device 103 of FIG. 10 is realized by a judgment data recording device 1035 and is provided with a register 2110 for storing a preceding adjoining channel voltage difference Vtc1 between a working channel applied voltage V₁ and a preceding channel applied voltage V₁- and a succeeding adjoining channel voltage difference Vtc2 between the applied voltage V₁ and the applied voltage V₁₊, a comparison device 2111 for comparing the absolute value of the preceding adjoining channel voltage difference Vtc1 and the absolute value of the succeeding adjoining channel voltage difference Vtc2, a conversion device 2112 for converting the greater adjoining channel voltage difference among the absolute value of the preceding adjoining channel voltage difference Vtc1 and the absolute value of the succeeding adjoining channel voltage difference Vtc2 into an adjoining channel voltage difference value Vtc, and a Vtcm register 2113 for adding an adjoining channel voltage difference value Vtc to the adjoining channel difference sum Vtcm to update the adjoining channel difference sum.

Further, the elapsed time recording device 102 of FIG. 10 is realized by an elapsed time recording register (EL_T register) 2114 for recording the elapsed time EL_T, while the elapsed time judgment device of FIG. 10 is realized by a comparison device 2115 for judging whether EI_T<Am_TH. The switching judgment processing device 1055 is provided with a unit time adjoining channel potential difference storage register (VtcmA register) 2116 for storing the value VtcmA obtained by dividing the Vtcm value by the elapsed time EL_T when the elapsed time judgment device 2115 judges that the predetermined counted time threshold Am_T has been exceeded and a comparison device 2117 for comparing the VtcmA value and a predetermined electrode voltage application judgment threshold VtcmA_TH. The electrode voltage application device 106 of FIG. 10 is realized in Example 5 by an electrode voltage application device 2117.

The values of the EL_T register 2114 and Vtcm register 2113 are cleared to 0 to be initialized when the division for obtaining the VtcmA value ends. The electrode voltage application device 106 applies voltage for switching the optical switch devices based on switching data to the optical switch devices of the optical switches. When the VtcmA value is the predetermined electrode voltage application judgment threshold VtcmA_TH or more, it sends a switching failure notice to the path switching instruction device 801.

FIG. 22 is a flowchart for explaining operation of the control system of a multichannel optical switch according to Example 5 shown in FIG. 21. In the figure, at step 2210, the system inputs switching data from the switching data output port 111 to the path switching instruction device 801 and, at step 2211, records the working channel applied voltage V₁ to the optical switch device of the working channel, the preceding channel applied voltage V₁- to the optical switch device of the preceding channel next to the working channel, and the succeeding channel applied voltage V₁₊ to the optical switch device of the succeeding channel next to the working channel in the applied voltage register 1012. Next, at step 2212, it stores the preceding adjoining channel voltage difference Vtc1 of the working channel applied voltage V₁ and the preceding channel applied voltage V₁- and the succeeding adjoining channel voltage difference Vtc2 of the applied voltage V₁ and applied voltage V₁₊ in the register 2110.

Next, at step 2213, the system uses the comparison device 2111 to compare the absolute value of the preceding adjoining channel voltage difference Vtc1 and the absolute value of the succeeding adjoining channel voltage difference Vtc2. If the result of the comparison is |Vtc1|>|Vtc2|, at step 2214, it uses the conversion device 2112 to convert this to Vtc1=Vtc, while if the result is |Vtc1|≤|Vtc|, at step 2215, it uses the conversion device 2112 to convert this to Vtc2=Vtc. Based on the thus obtained Vtc, at step 2216, the system performs the operation of Vtc+Vtcm=Vtcm and updates the value of the Vtcm register 2113. The starting value of Vtcm is for example 0. Next, at step 2217, the system records the elapsed time EL_T from when the switching data starts to be output from the path switching instruction device 801 in the EI_T register 2114.

Next, at step 2218, the system uses the elapsed time judgment device 2115 to compare the elapsed time EL_T and the predetermined threshold Am_TH. If EL_TH<Am_TH, then at step 2219, it supplies voltage to the electrodes of the corresponding optical switch devices. If EL_TH≥Am_TH, then at step 2220, it records the value VtcmA obtained by dividing Vtcm by the elapsed time EL_T in the unit time adjoining channel potential difference storage register (VtcmA) 2116. Next, at step 2221, it for example clears the values of the ET_T register 2114 and the Vtcm register 2113 to 0 to initialize them.

Next, at step 2222, the system uses the comparison device 2117 to compare the VtcmA value and the electrode voltage application judgment threshold VtcmA_TH. If VtcmA<VtcmA_TH, at step 2219, it supplies voltage to the electrodes of the corresponding optical switch devices. If VtcmA≥VtcmA_TH, at step 2223, it stops application of the electrode voltage and, at step 2224, notifies switching failure to the response input port 123 of the path switching instruction device 801.

### Example 6

FIG. 23 is a block diagram of the configuration of a control system of a multichannel optical switch according to Example 6 of the present invention. In the figure, a switching data input device 1016 is the same as the switching data input device 1015 in Example 5. Here, the explanation will be omitted. Furthermore, a judgment data recording device 1036 is provided with a register 2310 the same as the register 2110 in Example 5, a comparison device 2311 for comparing the absolute value of the preceding adjoining channel voltage difference Vtc1 and the adjoining channel difference threshold Vtc_TH, a comparison device 2312 for comparing the absolute value of the succeeding adjoining channel voltage difference Vtc2 and the adjoining channel difference threshold Vtc_TH, and a switching count storage register (Sw register) 2313 serving as a counter incremented by 1 when the absolute value of the preceding adjoining channel voltage difference Vtc1 is the adjoining channel difference threshold Vtc_TH or more and the absolute value of the succeeding adjoining channel voltage difference Vtc2 is the adjoining channel difference threshold Vtc_TH or more.

Furthermore, the elapsed time recording device 102 in FIG. 10 is realized in Example 6 by an EL_T register 2314 for recording the elapsed time EL_T if the absolute value of the preceding adjoining channel voltage difference Vtc1 is less than the adjoining channel difference threshold Vtc_TH and the absolute value of the succeeding adjoining channel voltage difference Vtc2 is less than the adjoining channel difference threshold Vtc_TH, while the elapsed time judgment device 104 in FIG. 10 is realized by a comparison device 2315, the same as the comparison device 2115 in Example 5, for judging EI_T<Am_TH.

Furthermore, the switching judgment processing device 105 in FIG. 10 is realized in Example 6 by a switching judgment processing device 1056 and is provided with an inter-channel leak processing Sw recording register (unit time switching count storage register) (SwcA register) 2316 for storing the value SwcA obtained by dividing the Sw value by the elapsed time EL_T when the elapsed time judgment device 2315 judges that the elapsed time EL_T has exceeded a predetermined counted time threshold Am_T and a comparison device 2317 for comparing the SwcA value and a predetermined electrode voltage application judgment threshold (adjoining channel potential difference threshold) SwcA_TH.

The values of the EL_T register 2314 and Sw register 2313 are for example cleared to 0 to be initialized when the above division for obtaining the SwcA value ends. The electrode voltage application device 106 applies voltage for switching the optical switch devices based on the switching data to the optical switch devices when the SwcA value is smaller than a predetermined electrode voltage application judgment threshold SwcA_TH and sends a switching failure notice to the path switching instruction device 801 when the SwcA value is the predetermined electrode voltage application judgment threshold SwcA_TH or more.

FIG. 24 is a flowchart for explaining the operation of the control system of a multichannel optical switch according to Example 6 shown in FIG. 23. In the figure, at step 241, the system inputs the switching data from the switching data output port 111 into the switching data input device 1012, while at step 242, it records the working channel applied voltage V₁ to the optical switch device of the working channel, the preceding channel applied voltage V₁- to the optical switch device of the preceding channel adjoining the working channel, and the succeeding channel applied voltage V₁₊ to the optical switch device of the succeeding channel adjoining the working channel in the applied voltage register 2110. Next, at step 243, the system records the preceding adjoining channel voltage difference Vtc1 between the working channel applied voltage V₁ and the preceding channel applied voltage V₁-and the succeeding adjoining channel voltage difference Vtc2 between the applied voltage V₁ and the applied voltage V₁₊ in the register 2110.

Next, at step 244, the system uses the comparison device 2310 to compare the absolute value of the preceding adjoining channel voltage difference Vtc1 and the adjoining channel difference judgment threshold Vtc_TH. If the result of this comparison is lVtc1l <Vtc_TH, at step 245, it compares the absolute value of the succeeding adjoining channel voltage difference Vtc2 and the adjoining channel difference judgment threshold Vtc_TH. If the result of this comparison is also lVtc2l<Vtc_TH, the system does nothing, then at step 246, the system records the elapsed time EL_T from when the switching data started to be output from the path switching instruction device 801 in the elapsed time recording device (EI_T register) 102.

If, at step 244, |Vtc1|≤Vtc_TH and, at step 245, |Vtc2 | ≤Vtc_TH, then at step 247, the system increments by 1 the Sw register 247 serving as the counter and executes step 246. Next, at step 248, it uses the elapsed time judgment device 104 to judge if EI_T<Am_TH. If the elapsed time EI_T is less than the predetermined threshold Am_TH, at step 2493, the system applies the electrode voltage, while if EI_T≥Am_TH, at step 2494, it stops the application of the electrode voltage and, at step 2495, sends a switching failure notice to the response input port 123 of the path switching instruction device 801.

### Example 7

FIG. 25 is a block diagram of the configuration of a control system of a multichannel optical switch according to Example 7 of the present invention. In the figure, a switching data input device 1017 is the same as the switching data input device 1015 of Example 5 shown in FIG. 21. Further, a judgment data recording device 1037 also has the same configuration as the judgment data recording device 1035 shown in Example 5 and is provided with a register 2510, comparison device 2511, conversion device 2512, and Vtcm register 2513. An elapsed time register 2514 and elapsed time judgment device 25 are the same as those in Example 5.

In Example 7, a switching judgment processing device 1057 is provided with a unit time wattage storage register (WvtcmA register) 2516 for storing a WvtcmA value obtained by subtracting from a product of an adjoining channel voltage difference Vtcm and a coefficient Wvtc for deriving the amount of heat generation envisioned from that adjoining channel difference voltage difference Vtcm (coefficient for conversion of wattage generated there based on Vtcm) the product of the elapsed time EL_T and a coefficient Wvtc_loss for deriving the amount of natural heat generation envisioned from the elapsed time EL T (coefficient for conversion of wattage not generating heat there based on EL_T) when the elapsed time judgment device 2515 judges that the predetermined counted time threshold Am_T has been exceeded and a comparison device 2517 for comparing the WvtcmA value with a predetermined WvtcmA threshold WvtcmA_TH. The system for example clears the value of the Vtcm register 2113 and the value of the EL_T register 2514 to the initial value of 0 when the subtraction for obtaining WvtcmA ends. An electrode voltage application device 2519 applies voltage for switching the optical switch devices based on the switching data to the optical switch devices when the WvtcmA value is smaller than a predetermined electrode voltage application judgment WvtcmA threshold WvtcmA_TH and sends a switching failure notice to the path switching instruction device 801 when the WvtcmA value is the predetermined WvtcmA threshold WvtcmA_TH or more.

FIG. 26 is a flowchart for explaining the operation of the control system of a multichannel optical switch according to Example 7 shown in FIG. 25. In the figure, step 261 to step 269 are the same as step 2210 to step 2218 in Example 5 shown in FIG. 22. Here, the explanations will be omitted.

In Example 7, at step 2691, the system subtracts from a product of an adjoining channel voltage difference Vtcm and a coefficient Wvtc for deriving the amount of heat generation envisioned from that adjoining channel difference voltage difference Vtcm the product of the elapsed time EL_T and a coefficient Wvtc_loss for deriving the amount of natural heat generation envisioned from the elapsed time EL_T. Next, at step 2692, it for example clears the contents of the Vtcm register 2113 and the EI_T register 2114 to 0 to initialize them. Next, at step 2693, it uses the comparison device 2517 to compare WcmA and WcmA_TH. If WcmA<WcmA_TH, then at step 2694, the system applies the electrode voltage. If WcmA≥WcmA_TH, then at step 2695, the system stops the application of the electrode voltage and, at step 2697, sends a switching failure notice to the response input port 123 of the path switching instruction device 801.

### Example 8

FIG. 27 is a block diagram of the configuration of a control system of a multichannel optical switch according to Example 8 of the present invention. In the figure, a switching data input device 1018 is the same as the switching data input device 1016 of Example 6 shown in FIG. 23. Further, a judgment data recording device 1038 also has the same configuration as the judgment data recording device 1036 shown in Example 6 and is provided with a register 270, comparison device 271, conversion device 272, and Sw register 273 serving as the switching count counter. An elapsed time register 274 and elapsed time judgment device 275 are also the same as those in Example 6.

In Example 8, the switching judgment processing device 105 in FIG. 10 is realized by a switching judgment processing device 1058 and is provided with a unit time wattage storage register (WswcA register) 276 for storing the WswcA value obtained by subtracting from the product of a switching count Sw and a coefficient Wswc for deriving an amount of heat generation envisioned from the switching count Sw a product of an elapsed time EL_T and a coefficient Wswc_loss for deriving an amount of natural heat generation envisioned from the elapsed time EL_T when the elapsed time judgment device 275 judges that the predetermined counted time threshold Am_T has been exceeded and a comparison device 277 for comparing the WswcA value with a predetermined wattage threshold (WswcA threshold) WswcA_TH. The value of the Sw register 273 and the value of the EL_T register are for example cleared to 0 to be initialized when the subtraction for obtaining the WswcA value ends. An electrode voltage application device 278 applies a voltage for switching the optical switch devices based on the switching data to the optical switch devices when the WswcA value is smaller than a predetermined WswcA threshold WswcA_TH and sends a switching failure notice to the path switching instruction device when the WswcA value is the predetermined WswcA threshold WswA Th or more.

FIG. 28 is a flowchart for explaining the operation of the control system of a multichannel optical switch according to Example 8 shown in FIG. 27. In the figure, steps 281 to 288 are the same as steps 241 to 248 in Example 6 shown in FIG. 24. Here, the explanations are omitted.

In Example 8, at step 289, the system stores the WswcA value, obtained by subtracting from the product of a switching count Sw and a coefficient Wswc for deriving an amount of heat generation envisioned from the switching count Sw a product of an elapsed time EL_T and a coefficient Wswc_loss for deriving an amount of natural heat generation envisioned from the elapsed time EL_T when the elapsed time judgment device 275 judges that a predetermined counted time threshold Am_T has been exceeded, in the WawcA register 276. Next, at step 2891, the system clears the values of the Sw register 273 and the EI_T register 274 to 0 and, at step 2893, judges if WxwcA<WswcA_TH by the comparison device 277. If WxwcA<WswcA_TH, then at step 2893, the system applies the electrode voltage, while if Wxwc≥WswcA_TH, then at step 2894, it stops the application of the electrode voltage and, at step 2895, sends a switching failure notice to the response input port 123 of the path switching instruction device 801.

In the above explained Examples 1 to 8, instead of clearing the registers to 0, it is also possible to clear them to predetermined initial values.

### Example 9

FIG. 29 is a view showing a means 29 for stopping the application of the electrode voltage when the judgment in the switching judgment processing device in Examples 1 to 8 of the present invention is that the value is a predetermined threshold or more shown in the figure. FIGS. 30 to 32 are views showing examples of using other means in place of the means 29 in Examples 1 to 8 by Example 9 of the present invention. That is, the present invention is not limited to the means 29 shown in FIG. 29. According to Example 9 of the present invention, as shown in FIG. 30, instead of stopping the application of the electrode voltage, it is also possible to prevent the electrode voltage from changing by a means 30 for continuing to hold the electrode voltage as it is without relying on the switching data.

Further, as shown in FIG. 31, instead of stopping the application of the electrode voltage as a result of the judgment at the switching judgment processing device 105 in Examples 1 to 8 of the present invention, it is also possible to provide a means 31 for continuing to apply an irregular voltage. For example, when the input channel is the channel 1, it is also possible to perform processing to continue to apply applied voltage deflecting the light to before the channel 1 (for example, equivalent to channel 0), applied voltage deflecting the light to after the channel 8 (for example, equivalent to channel 9), or applied voltage deflecting the light between any channels (intermediate value of the paths (for example, near channel 2.5 between the channel 2 and channel 3)) and notify switching failure to the path switching instruction device 801.

In addition, in Examples 5 to 8, as shown in FIG. 32, instead of stopping the application of the electrode voltage, it is also possible to provide a means 32 for controlling the output of the drive circuit of the adjoining electrode to a high impedance and thereby suppress the generation of leakage current between the wires and notify switching failure of the adjoining channel to the path switching instruction device 801.

### Example 10

FIG. 33 is a block diagram of part of the configuration of the control system of a multichannel optical switch according to Example 10 of the present invention. In the figure, in Example 10, the system is provided with a predicted reconnection time notification means 33 for notifying a certain restrictive condition for allowing acceptance of switching when it uses the switching judgment processing device 105 to send a switching failure notice to the path switching instruction device 801. Due to this, it narrows down the switching data from the path switching instruction device 801 and lightens the load of the switch by a certain switching restriction.

### Example 11

FIG. 34 is a block diagram of part of the configuration of the control system of a multichannel optical switch according to Example 11 of the present invention. In the figure, in Example 11, the system uses data on the combination of paths allowing switching or data on the time interval of the input of switching data allowing switching as the "certain restrictive condition" in Example 10 and is provided with a switching acceptance allowance data notification means 34 for notifying this data.

### Example 12

FIG. 35 is a table for explaining the relationship between the input/output channels and the unit voltage for explaining Example 12 of the present invention, while FIG. 36 is a diagram for explaining the relationship of direction of the path and the sign of the unit voltage based on the table shown in FIG. 35.

In the processing of Examples 1, 3, and 5 to 11, if using the unit voltage shown in FIG. 35 instead of directly processing and recording the value of the applied analog voltage output from an operational amplifier etc. as the value of the voltage recorded in the register, handling of the processing and recording is simplified. That is, the voltage recorded in the register at the path P1 where the input channel is 1 and the output channel path is also 1 is set in advance to 0V, the voltage recorded in the register at the path P2 where the input channel is 1 and the output channel is 2 is set in advance to 1V, etc. Further, as shown in FIG. 36, for example, when setting the path P6, from the table of FIG. 35, the unit voltage becomes -1V, when setting the path P5, the unit voltage becomes -4V, and when setting the path P22, the unit voltage becomes -3V.

Summarizing the industrial applicability of the invention, by having the multichannel, highly integrated EO-SW judge switching when switching data is input from the outside and, when judging switching must not be performed, not allowing switching and notifying switching failure to a path switching instruction device at the outside, it is possible to reject long, continuous, high speed switching requests by t number of criteria and thereby suppress the frequency of occurrence of leakage current and, as a result, keep down the rise in temperature of the optical switch devices and stably control and operate the EO-SW.

While the invention has been described with reference to specific embodiments chosen for purpose of illustration, it should be apparent that numerous conversions could be made thereto by those skilled in the art without departing from the basic concept and scope of the invention.

## Claims

1. A control system of optical switch devices of a multichannel optical switch using devices having an electro-optical effect, wherein
said control system of a multichannel optical switch comprises:
a switching data input device for inputting switching data of said optical switch devices from a path switching instruction device;
an elapsed time recording device for recording an elapsed time EL_T from which said switching data starts to be output from said path switching instruction device;
a judgment data recording device for recording judgment data for judging whether switching of said optical switch devices is possible based on said switching data;
an elapsed time judgment device for determining whether said elapsed time EL_T has exceeded a predetermined counted time threshold Am_T;
a switching judgment processing device for judging switching based on an output of said elapsed time judgment device and an output of said judgment data recording device; and
an electrode voltage application device,
said electrode voltage application device applying voltage for switching said optical switch devices based on said switching data when said elapsed time judgment device has judged that said elapsed time EL_T is shorter than said predetermined counted time threshold Am_T,
said electrode voltage application device applying voltage for switching said optical switch devices based on said switching data to said optical switch devices when said elapsed time judgment device has judged that said elapsed time EL_T has exceeded said predetermined counted time threshold Am_T only when said switching judgment processing device judges that predetermined switching conditions have been met and said electrode voltage application device not applying voltage for switching said optical switch devices to said optical switch devices and sending a switching failure notice from said switching judgment processing device to said path switching instruction device when said switching judgment processing device judges that predetermined switching conditions have not been met.

2. A control system of a multichannel optical switch as set forth in claim 1, wherein
said switching data input device comprises a Vt1 register for recording a voltage Vt1 applied by a path connection of before switching of said optical switch devices and a Vt2 register for recording a voltage Vt2 applied by a path connection of after switching of said optical switches,
said judgment data recording device is provided with a Vts register for recording an absolute value Vts of a difference of said voltage Vt1 and voltage Vt2 and a Vtsm register for adding a value stored in said Vts register to a switching channel difference sum Vtsm to update said switching channel difference sum Vtsm,
said elapsed time recording device is an EL_T register for recording said elapsed time EL_T,
said switching judgment processing device is provided with a VtsmA register for storing a value VtsmA obtained by dividing said Vtsm value by said elapsed time EL_T when said elapsed time judgment device has judged that said predetermined counted time threshold Am_T has been exceeded and a comparison device for comparing said VtsmA value and a predetermined electrode voltage application judgment threshold VtsmA_TH,
the values of said EL_T register and said Vtsm register are cleared to a predetermined initial value when said division ends, and
said electrode voltage application device applies voltage for switching said optical switch devices based on said switching data to said optical switch devices when said VtsmA value is smaller than said predetermined electrode voltage application judgment threshold VtsmA_Th and sends a switching failure notice to said path data switching instruction device when said VtsmA value is said predetermined electrode voltage application judgment threshold VtsmA_TH or more.

3. A control system of a multichannel optical switch as set forth in claim 1, wherein
said switching data input device and judgment data recording device comprise an Sw register for recording the switching count Sw of said optical switch devices,
said elapsed time recording device is an EL_T register for recording the elapsed time EL_T,
said switching judgment processing device comprises an SwA register for storing an SwA value obtained by dividing said switching count Sw by said elapsed time EL_T when said elapsed time judgment device has judged that said predetermined counted time threshold Am_T has been exceeded and a comparison device for comparing said SwA value with a predetermined electrode voltage application judgment threshold SwA_TH,
the value of said Sw register and the value of said EL_T register are cleared to a predetermined initial value when said division is ended, and
said electrode voltage application device applies voltage for switching said optical switch devices based on said switching data to switch said optical switch devices when said SwA value is smaller than said predetermined electrode voltage application judgment threshold SwA_TH and sends a switching failure notice to said path data switching instruction device when said SwA value is said predetermined electrode voltage application judgment threshold SwA_TH or more.

4. A control system of a multichannel optical switch as set forth in claim 1, wherein
said switching data input device comprises a Vt1 register for recording a voltage Vt1 applied by a path connection of before switching of said optical switch devices and a Vt2 register for recording a voltage Vt2 applied by a path connection of after switching of said optical switches,
said judgment data recording device comprises a Vts register for recording an absolute value Vts of a difference between said voltage Vt1 and said voltage Vt2 and a Vtsm register for adding a value stored in said Vts register to a switching channel difference sum Vtsm to update the switching channel difference sum Vtsm,
said elapsed time recording device is an EL_T register for recording said elapsed time EL_T,
said switching judgment processing device comprises a WvtsmA register for storing a channel switching heat generation calculated value (WvtsmA value) obtained by subtracting from a product of said switching channel difference sum Vtsm and a coefficient Wvt for deriving the natural heat discharge envisioned from said switching channel difference sum Vtsm the product of said elapsed time EL_T and a coefficient Wvt_loss for deriving the amount of natural heat discharge envisioned from said elapsed time EL_T when said elapsed time judgment device has judged that said predetermined counted time threshold Am_T has been exceeded and a comparison device for comparing said WvtsmA value with a predetermined WvtsmA threshold WvtsmA_TH,
the value of said Vtsm register and the value of said EL_T register are cleared to a predetermined initial value when said subtraction ends, and
said electrode voltage application device applies voltage for switching said optical switch devices based on said switching data to said optical switch devices when said WvtsmA value is smaller than said predetermined electrode voltage application judgment threshold WvtsmA threshold WvtsmA_TH and sends a switching failure notice to said path data switching instruction device when said WvtsmA value is said WvtsmA threshold WvtsmA_TH or more.

5. A control system of a multichannel optical switch as set forth in claim 1, wherein
said switching data input device and judgment data recording device comprise an Sw register for recording the switching count Sw of said optical switch devices,
said elapsed time recording device is an EL_T register for recording the elapsed time EL_T,
said switching judgment processing device comprises a WswA register for storing a WswA value obtained by subtracting from a product of said switching count Sw and a coefficient Wsw for deriving the amount of heat generation envisioned from said switching count Sw the product of said elapsed time EL_T and a coefficient Wsw_loss for deriving the amount of natural heat generation envisioned from said elapsed time EL_T when said elapsed time judgment device has judged that said predetermined counted time threshold Am_T has been exceeded and a comparison device for comparing said WswA value with a predetermined WswA threshold WswA_TH,
the value of the Sw register and the value of the EL_T register respectively are cleared to a predetermined initial value when said subtraction ends, and
said electrode voltage application device applies voltage for switching said optical switch devices based on said switching data to said optical switch devices when said WswA value is smaller than said predetermined WswA threshold WswA_TH and sends a switching failure notice to said path data switching instruction device when said WswA value is said WswA threshold WswA_TH or more.

6. A control system of a multichannel optical switch as set forth in claim 1, wherein
said switching data input device comprises an applied voltage register for recording a working channel applied voltage V₁ for the optical switch device of a working channel, a preceding channel applied voltage V₁₋ for the optical switch device of the preceding channel adjoining the working channel, and a succeeding channel applied voltage V₁₊ for the optical switch device of the succeeding channel adjoining the working channel,
said judgment data recording device comprises a register for storing a preceding adjoining channel voltage difference Vtc1 between said working channel applied voltage V₁ and said preceding channel applied voltage V₁₋ and a succeeding adjoining channel voltage difference Vtc2 between said applied voltage V₁ and said applied voltage V₁₊, a comparison device for comparing said absolute value of the preceding adjoining channel voltage difference Vtc1 and said absolute value of the succeeding adjoining channel voltage difference Vtc2, a conversion device for converting the greater adjoining channel voltage difference among said absolute value of the preceding adjoining channel voltage difference Vtc1 and said absolute value of the succeeding adjoining channel voltage difference Vtc2 into an adjoining channel voltage difference value Vtc, and a Vtcm register for adding said adjoining channel voltage difference value Vtc to the adjoining channel difference sum Vtcm to update the adjoining channel difference sum,
said elapsed time recording device is an EL_T register for recording the elapsed time EL_T, and
said electrode voltage application device applies voltage for switching said optical switch devices based on said switching data to said optical switch devices when said VtcmA value is smaller than said predetermined electrode voltage application judgment threshold VtcmA_TH and sends a switching failure notice to said path data switching instruction device when said VtcmA value is said predetermined electrode voltage application judgment threshold VtcmA_TH or more.

7. A control system of a multichannel optical switch as set forth in claim 1, wherein
said switching data input device comprises an applied voltage register for recording a working channel applied voltage V₁ for the optical switch device of a working channel, a preceding channel applied voltage V₁₋ for the optical switch device of the preceding channel adjoining the working channel, and a succeeding channel applied voltage V₁₊ for the optical switch device of the succeeding channel adjoining the working channel,
said judgment data recording device comprises a register for storing a preceding adjoining channel voltage difference Vtc1 between said working channel applied voltage V₁ and said preceding channel applied voltage V₁₋ and a succeeding adjoining channel voltage difference Vtc2 between said applied voltage V₁ and said applied voltage V₁₊, a first comparison device for comparing said absolute value of the preceding adjoining channel voltage difference Vtc1 and an adjoining channel difference judgment threshold Vtc_TH, a second comparison device for comparing said absolute value of the succeeding adjoining channel voltage difference Vtc2 and said adjoining channel difference judgment threshold Vtc_TH, and a switch count counter for incrementing a switch count Sw by "1" to update Sw when said absolute value of the preceding adjoining channel voltage difference Vtc1 is said adjoining channel difference threshold Vtc_TH or more and said absolute value of the succeeding adjoining channel voltage difference Vtc2 is said adjoining channel difference threshold Vtc_TH or more,
said elapsed time recording device is an EL_T register for recording the elapsed time EL_T,
said switching judgment processing device comprises an SwcA register for storing a unit time inter-channel leak processing value SwcA obtained by dividing the value Sw of said switch count counter by said elapsed time EL_T when said elapsed time judgment device has judged that said predetermined counted time threshold Am_T has been exceeded and a third comparison device for comparing said inter-channel leak processing value SwcA and a predetermined channel leak processing electrode voltage application judgment threshold SwcA_TH,
the values of said EL_T register and said switch count counter are cleared to a predetermined initial value when said division ends, and
said electrode voltage application device applies voltage for switching the optical switch devices based on the switching data to the optical switch devices when said inter-channel leak processing value SwcA is smaller than said predetermined channel leak processing electrode voltage application judgment threshold SwcA_TH and sends a switching failure notice to the path data switching instruction device when said inter-channel leak processing value SwcA is said predetermined channel leak processing electrode voltage application judgment threshold SwcA TH or more.

8. A control system of a multichannel optical switch as set forth in claim 1, wherein
said switching data input device comprises an applied voltage register for recording a working channel applied voltage V₁ for the optical switch device of a working channel, a preceding channel applied voltage V₁₋ for the optical switch device of the preceding channel adjoining the working channel, and a succeeding channel applied voltage V₁₊ for the optical switch device of the succeeding channel adjoining the working channel,
said judgment data recording device comprises a register for storing a preceding adjoining channel voltage difference Vtc1 between said working channel applied voltage V₁ and said preceding channel applied voltage V₁₋ and a succeeding adjoining channel voltage difference Vtc2 between said applied voltage V₁ and said applied voltage V₁₊, a comparison device for comparing said absolute value of the preceding adjoining channel voltage difference Vtc1 and said absolute value of the succeeding adjoining channel voltage difference Vtc2, a conversion device for converting the greater adjoining channel voltage difference among said absolute value of the preceding adjoining channel voltage difference Vtc1 and said absolute value of the succeeding adjoining channel voltage difference Vtc2 into an adjoining channel voltage difference value Vtc, and a Vtcm register for adding said adjoining channel voltage difference value Vtc to the adjoining channel difference sum Vtcm to update the adjoining channel difference sum,
said elapsed time recording device is an EL_T register for recording the elapsed time EL_T,
said switching judgment processing device comprises a WvtcmA register for a channel leak channel switching heat generation calculated value (WvtcmA value) obtained by subtracting from a product of said adjoining channel voltage difference Vtc and a coefficient Wvtc for deriving the amount of heat generation envisioned from said adjoining channel difference voltage difference Vtc the product of said elapsed time EL_T and a coefficient Wswc_loss for deriving the amount of natural heat generation envisioned from said elapsed time EL_T when said elapsed time judgment device judges that said predetermined counted time threshold Am_T has been exceeded and a comparison device for comparing said WvtcmA value with a predetermined WvtcmA threshold WvtcmA_TH,
the value of said Vtcm register and the value of said EL_T register are cleared to a predetermined initial value when the subtraction ends, and
said electrode voltage application device applies voltage for switching said optical switch devices based on said switching data to said optical switch devices when said WvtcmA value is smaller than said predetermined WvtcmA threshold WvtcmA_TH and sends a switching failure notice to said path data switching instruction device when said WvtcmA value is said predetermined WvtcmA threshold WvtcmA_TH or more.

9. A control system of a multichannel optical switch as set forth in claim 1, wherein
said switching data input device comprises an applied voltage register for recording a working channel applied voltage V₁ for the optical switch device of a working channel, a preceding channel applied voltage V₁- for the optical switch device of the preceding channel adjoining the working channel, and a succeeding channel applied voltage V₁₊ for the optical switch device of the succeeding channel adjoining the working channel,
said judgment data recording device comprises a register for storing a preceding adjoining channel voltage difference Vtc1 between said working channel applied voltage V₁ and said preceding channel applied voltage V₁₋ and a succeeding adjoining channel voltage difference Vtc2 between said applied voltage V₁ and said applied voltage V₁₊, a first comparison device for comparing said absolute value of the preceding adjoining channel voltage difference Vtc1 and an adjoining channel difference judgment threshold Vtc_TH, a second comparison device for comparing said absolute value of the succeeding adjoining channel voltage difference Vtc2 and said adjoining channel difference judgment threshold Vtc_TH, and a switch count counter for incrementing a switch count Sw by "1" to update Sw when said absolute value of the preceding adjoining channel voltage difference Vtc1 is said adjoining channel difference threshold Vtc_TH or more and said absolute value of the succeeding adjoining channel voltage difference Vtc2 is said adjoining channel difference threshold Vtc_TH or more,
said elapsed time recording device is an EL_T register for recording the elapsed time EL_T,
said switching judgment processing device comprises a WawcA register for storing a channel leak channel switching heat generation calculated value (WawcA value) obtained by subtracting from a product of said switching count Sw and a coefficient Wswc for deriving the amount of heat generation envisioned from said switching count Sw the product of said elapsed time EL_T and a coefficient Wswc_loss for deriving the amount of natural heat generation envisioned from said elapsed time EL_T when said elapsed time judgment device has judged that said predetermined counted time threshold Am_T has been exceeded and a comparison device for comparing said WswcA value with a predetermined WswcA threshold WswcA_TH,
the values of said Sw register and said EL_T register are cleared when said subtraction ends, and
said electrode voltage application device applies voltage for switching the optical switch devices based on the switching data to the optical switch devices when said WswcA value is smaller than said predetermined WswcA threshold WswcA_TH and sends a switching failure notice to the path data switching instruction device when said WswcA value is said predetermined WswcA threshold WswcA_TH or more.

10. A control system of a multichannel optical switch as set forth in claim 1, further comprising a means for stopping the application of electrode voltage when sending a switching failure notice to said path switching instruction device, a means for continuing to hold the electrode voltage as it is without relying on switching data from said path switching instruction device, and a means for continuing to apply applied voltage irregular for the path connection to the electrodes for the path connection.

11. A control system of a multichannel optical switch as set forth in claim 6, wherein said electrode voltage application device comprises a means for controlling the output of a drive circuit of an adjoining electrode to a high impedance when sending said switching failure notice to said path switching instruction device.

12. A control system of a multichannel optical switch as set forth in claim 1, wherein said electrode voltage application device further comprises a means for also notifying a predicted time until reconnection becomes possible when sending said switching failure notice to said path data switching instruction device.

13. A control system of a multichannel optical switch as set forth in claim 1, further comprising a means for also notifying restrictive conditions for allowing acceptance of switching when sending said switching failure notice to said path data switching instruction device.

14. A control system of a multichannel optical switch as set forth in claim 13, wherein said restrictive conditions are at least one of data of a combination of paths for allowing switching and data of a time interval of input of switching data for allowing switching.

15. A control system of a multichannel optical switch as set forth in claim 1, which uses as the value of voltage used by said judgment data recording means a unit voltage preset between paths.
